(19)

**Europäisches Patentamt**
**European Patent Office**
**Office européen des brevets**

(11) **EP 3 852 088 A1**

(12) **EUROPÄISCHE PATENTANMELDUNG**

(43) Veröffentlichungstag:
　　21.07.2021　Patentblatt 2021/29

(51) Int Cl.:
　　*G09B 23/28* (2006.01)　　　*A63H 3/36* (2006.01)
　　*A63H 13/00* (2006.01)

(21) Anmeldenummer: 21020093.7

(22) Anmeldetag: **28.06.2017**

(84) Benannte Vertragsstaaten:
　　**AL AT BE BG CH CY CZ DE DK EE ES FI FR GB**
　　**GR HR HU IE IS IT LI LT LU LV MC MK MT NL NO**
　　**PL PT RO RS SE SI SK SM TR**

(30) Priorität: **05.07.2016　AT 3172016**

(62) Dokumentnummer(n) der früheren Anmeldung(en)
　　nach Art. 76 EPÜ:
　　**17739176.0 / 3 482 386**

(71) Anmelder: **SIMCharacters GmbH**
　　**1060 Wien (AT)**

(72) Erfinder:
　　• **Schwindt, Jens Christian**
　　　**A-3021 Pressbaum (AT)**

　　• **Unger, Ewald**
　　　**A-1210 Wien (AT)**
　　• **Haller, Michael**
　　　**A-1040 Wien (AT)**
　　• **Nepomucky, Tanja**
　　　**A-1170 Wien (AT)**
　　• **Schmoll, Martin**
　　　**A-1230 Wien (AT)**

(74) Vertreter: **Keschmann, Marc**
　　**Haffner und Keschmann Patentanwälte GmbH**
　　**Schottengasse 3a**
　　**1010 Wien (AT)**

Bemerkungen:
　　Diese Anmeldung ist am 23-02-2021 als
　　Teilanmeldung zu der unter INID-Code 62 erwähnten
　　Anmeldung eingereicht worden.

(54) **PATIENTENSIMULATOR**

(57)　Bei einem Patientensimulator, insbesondere Frühgeborenen-, Neugeborenen- oder Kindersimulator, umfassend umfassend eine Thoraxnachbildung, eine Abdomennachbildung, einen Stethoskopsimulator und einen Audiogenerator, weist die Thoraxnachbildung und die Abdomennachbildung wenigstens zwei Abstandssensoren auf, die mit einem Stethoskopkopf des Stethoskopsimulators zur Ermittlung der Position des Stethoskopkopfs zusammenwirken, wobei die ermittelten Positionsdaten dem Audiogenerator zuführbar sind, wobei der Audiogenerator einen Speicher für Audiodateien und eine Verarbeitungseinrichtung zum Abmischen der Audiodateien in Abhängigkeit von den Positionsdaten zu einem abgemischten Audiosignal aufweist, das einem Ohrhörer des Stethoskopsimulators zuführbar ist.

Fig. 1

EP 3 852 088 A1

**Beschreibung**

Die Erfindung betrifft einen Patientensimulator, insbesondere Frühgeborenen-, Neugeborenen- oder Kindersimulator, umfassend eine Nachbildung wenigstens eines Körperteils eines menschlichen Patienten.

Da die Versorgung eines kritisch kranken Früh- oder Neugeborenen ein relativ seltenes Ereignis ist, bedarf sie eines schnellen, überlegten und strukturierten Handelns des medizinischen Personals, weshalb es immer wieder zu Problemen in der Umsetzung der medizinischen Handlungen und der Zusammenarbeit im Team kommt. Werden bei der Versorgung eines lebensbedrohten Früh- oder Neugeborenen nicht die richtigen Maßnahmen getroffen, kann dies einen lebenslangen Einfluss auf die weitere Entwicklung des Kindes haben. Gerade in der Kinderheilkunde ist daher die Durchführung von Simulationstrainings eine ethische Verpflichtung. Nur so können die notwendigen Erfahrungen und Fertigkeiten für die Versorgung kritisch kranker Früh- oder Neugeborener erworben werden, ohne das Leben oder die Gesundheit der Patienten zu gefährden. Der Qualitätsanspruch der heutigen Medizin erfordert es, dass auch seltene Ereignisse trainiert werden, um einerseits Leben zu retten und andererseits die Lebensqualität nach einer Notfallsituation zu verbessern.

Derzeit erhältliche Säuglings- und Neugeborenenpuppen lassen die Simulation vieler Pathologien aufgrund der geringen Größe und der so erforderlichen Miniaturisierung von Technik- und Steuerelementen nicht zu. Darüber hinaus mangelt es derartigen Simulationspuppen häufig an der Realitätstreue, wodurch an der Puppe geübte Handhabungen nicht automatisch die Tätigkeiten in der Realität verbessern.

In der WO2012/155283A1 ist ein Lungensimulator beschrieben, der mit mindestens einer Luftkammer ausgestattet ist, die beispielsweise als Silikonbalg ausgebildet ist, um die Lungenfunktion in Krankheit sowie im gesunden Zustand bestmöglich zu simulieren. Nachteilig am in der WO2012/155283A1 offenbarten Lungenmodell ist, dass dieses aufgrund seiner Größe nicht innerhalb eines naturgetreuen Simulators (Puppe) anordenbar ist, sondern sich außerhalb der Puppe befindet.

Die vorliegende Erfindung zielt daher darauf ab, einen Patientensimulator, insbesondere Frühgeborenensimulator dahingehend zu verbessern, dass die Realitätstreue verbessert und die Simulation verschiedenster pathologischer Zustände auch bei einer kleinbauenden Ausführung für die Frühgeborenensimulation ermöglicht wird.

Zur Lösung dieser Aufgabe sieht die Erfindung gemäß einem ersten Aspekt einen Patientensimulator, insbesondere einen Frühgeborenen-, Neugeborenen- oder Kindersimulator vor, umfassend eine Thoraxnachbildung, einen Lungensimulator und eine zum Lungensimulator führende Luftröhrennachbildung, wobei die Thoraxnachbildung eine Brustkorbnachbildung mit wenigstens einem heb- und senkbaren Brustkorbelement zur Simulation einer Brustkorbhebung und -senkung aufweist, wobei das wenigstens eine heb- und senkbare Brustkorbelement mit einer vom Lungensimulator unabhängig ansteuerbaren Hub- und Senkmechanik zusammenwirkt.

Die Erfindung beruht somit darauf, den Lungensimulator und die Simulation der Brustkorbhebung und -senkung als funktional getrennte Einheiten auszubilden, die gesondert voneinander zur Durchführung von Simulationsvorgängen angesteuert werden können. Unter einem Lungensimulator ist hierbei die Nachbildung der grundlegenden atemmechanischen Parameter eines Menschen, wie insbesondere des Strömungswiderstandes der Atemwege (Resistance) und der Dehnbarkeit der Lunge (Compliance) zu verstehen. Im einfachsten Fall umfasst ein Lungensimulator eine pneumatische Reihenschaltung einer Resistance und einer Compliance. Der Lungensimulator dient dazu, verschiedene Zustände der Lunge eines Patienten z.B. hinsichtlich der Resistance und der Compliance zu simulieren, was insbesondere für das Üben der maschinellen Beatmung mit Hilfe eines Patientensimulators an echten Beatmungsgeräten von großem Vorteil ist. Um in diesem Zusammenhang eine endotracheale Intubation zu ermöglichen, umfasst der Patientensimulator erfindungsgemäß eine zum Lungensimulator führende Luftröhrennachbildung sowie vorzugsweise eine anatomische Kehlkopfnachbildung.

Bei herkömmlichen Ausführungen von Patientensimulatoren handelt es sich um ein pneumatisches Lungenmodell, meist einen elastischen Hohlkörper, der mit einer Spontanatmungs-Druckquelle verbunden ist, um den Hohlkörper entsprechend der simulierten Atmung periodisch zu füllen und zu entleeren, wodurch der Hohlkörper periodisch ausgedehnt und kontrahiert wird. Die Thoraxnachbildung ist bei herkömmlichen Ausführungen mit einem heb- und senkbaren Brustkorbelement ausgebildet, unter dem der elastische Hohlkörper des Lungensimulators angeordnet ist, sodass die Brustkorbhebung durch den Druck des sich ausdehnenden Hohlkörpers und die Brustkorbsenkung durch elastische Rückstellung des Brustkorbelements oder des Hohlkörpers erfolgt. Die Bewegung des Brustkorbs ist somit an die Spontanatmungssimulation und Beatmung des Lungensimulators direkt gekoppelt.

Im Gegensatz dazu kann die Brustkorbhebung und -senkung bei der erfindungsgemäßen Ausbildung unabhängig vom momentanen Zustand des Lungensimulators simuliert werden, weil das heb- und senkbare Brustkorbelement von einer vom Lungensimulator mechanisch bzw. körperlich unabhängigen Hub- und Senkmechanik angetrieben wird. Der Lungensimulator und die Brustkorbhebung und -senkung sind somit als funktional getrennte Einheiten ausgebildet, die gesondert voneinander zur Durchführung von Simulationsvorgängen angesteuert werden können. Dadurch können nicht nur physiologisch normale Zustände, sondern auch verschiedene pathologische Zustände realitätsgetreu simuliert und erweiterte Übungsmöglichkeiten für den Übungsteilnehmer geschaffen werden. Außerdem wird die Möglichkeit geschaffen, den Lungensimulator oder einzelne Komponenten desselben an einer anderen Stelle als unmittelbar unterhalb des heb- und senkbaren Brustkorbelements anzuordnen, wodurch eine platzsparende Anordnung erleichtert wird. Eine bevorzugte Ausbildung der Erfindung sieht in diesem Zusammenhang vor, dass der Lungensimulator innerhalb der Thoraxnachbildung und/oder innerhalb einer Abdomennachbildung angeordnet ist. Insbesondere kann der Lungensimulator oder einzelne Komponenten desselben innerhalb der Abdomennachbildung angeordnet werden.

Die unabhängige Ansteuerung der Heb- und Senkmechanik bietet den weiteren Vorteil, dass die Heb- und Senkbewegungen in einfacher Weise auf einer auf einem Bildschirm eines Geräts, wie z.B. eines PCs, angezeigten graphischen Benutzeroberfläche dargestellt werden können.

Die graphische Benutzeroberfläche umfasst hierbei bevorzugt eine graphische Darstellung des simulierten Patienten, wobei die graphische Benutzeroberfläche derart mit dem Patientensimulator oder einer diesen ansteuernden Steuereinrichtung zusammenwirkt, dass auf der graphischen Benutzeroberfläche eine Hebung und eine Senkung des Brustkorbs des dargestellten Patienten dargestellt wird, die synchron ist mit der durch die Heb- und Senkmechanik des Patientensimulators bewirkten Brustkorbhebung und -senkung.

Zur Simulation physiologisch normaler Zustände des Atemsystems, insbesondere der Lunge, wird die Hub- und Senkmechanik der Thoraxnachbildung so angesteuert, dass sich das wenigstens eine heb- und senkbare Brustkorbelement synchron mit der Luftfüllung und -entleerung des Lungensimulators hebt und senkt. Dies ist insbesondere bei der Durchführung von Beatmungsübungen mit dem Patientensimulator der Fall, wie z.B. Beatmungsübungen mit Maske und Beatmungsbeutel. Der Simulator lässt sich hierbei bevorzugt dann beatmen, wenn der Kopf in der Neutralposition liegt und die Beatmungsmaske korrekt abgedichtet ist. Wenn sich am Simulator dann der Brustkorb hebt, so ist für den Benutzer (entsprechend der Realität) erkennbar, dass er effektiv beatmet. Zur technischen Umsetzung einer solchen Simulation ist bevorzugt vorgesehen, dass der Lungensimulator wenigstens eine Kavität, bevorzugt zwei Kavitäten, nämlich eine zur Simulation des rechten Lungenflügels und eine zur Simulation des linken Lungenflügels, aufweist, die - bevorzugt über die Luftröhrennahbildung - mit Luft aus einem Beatmungsgerät befüllbar ist bzw. sind, wobei Drucksensoren zur Messung des Drucks in der bzw. den Kavität(en) vorgesehen sind. Die Signale des bzw. der Drucksensors/en sind bevorzugt einer Steuereinrichtung zur Ansteuerung der Hub- und Senkmechanik der Thoraxnachbildung zugeführt, um das wenigstens eine heb- und senkbare Brustkorbelement in Abhängigkeit von den Drucksignalen anzuheben und abzusenken. Die Drucksensoren sind bevorzugt angeordnet und ausgebildet, um den Beatmungsdruck und das Beatmungsvolumen zu ermitteln. Die wenigstens eine Kavität des Lungensimulators, die bevorzugt als starrwandige Kavität ausgebildet ist, ist zu diesem Zweck bevorzugt im Volumen verstellbar ausgebildet. Das Volumen kann gemäß den physikalischen Grundlagen der Compliance und Resistance dynamisch angepasst werden. Die Berechnung des aktuellen Volumens basiert z.B. auf einem angepassten Algorithmus innerhalb eines Mikrocontrollers. Zur Einstellung der physiologischen und pathologischen Atemparameter des Lungensimulators ist bevorzugt ein elektrischer Antrieb vorgesehen.

Alternativ kann die Lunge auch passiv ausgeführt werden. Dazu wird die Kammer flexibel ausgeführt, beispielsweise als Kammer mit einer geöffneten Seite, welche von einer flexiblen Membran überspannt wird. Die Ausdehnung der Membran in Abhängigkeit vom Beatmungsdruck erlaubt hierbei die Simulation des Tidalvolumens. Durch die Wahl der Dicke, des Materials oder der Einstellbarkeit der Spannung der Membran kann die Compliance der Lunge an ein real vergleichbares Äquivalent angepasst werden.

Im Zusammenhang mit der Simulation von pathologischen Zuständen ist das Atemnotsyndrom von besonderer Bedeutung. Im Rahmen eines Atemnotsyndroms ist eine effektive Atmung und Belüftung der Lungen erschwert. Auf Grund des Unterdrucks in der Lunge, die sich nur schlecht mit Luft füllen kann, wird das Zwerchfell in Richtung Brustkorb gezogen. Der Brustkorb hebt sich kaum und senkt sich scheinbar bei Anspannen des Zwerchfells. Dadurch entsteht der Eindruck einer Schaukelatmung bzw. paradoxen Atmung, da sich der Brustkorb beim Einatmen senkt und beim Ausatmen scheinbar hebt. Durch die gegenläufige Bewegung des Abdomens wird dieser Eindruck noch verstärkt. Die Simulation einer Schaukelatmung wird im Rahmen der Erfindung durch die vom Lungensimulator unabhängige Steuerung der Hub- und Senkmechanik des wenigstens einen heb- und senkbaren Brustkorbelements ermöglicht, wobei die Steuereinheit der Hub- und Senkmechanik eingerichtet ist, um das wenigstens eine Brustkorbelement anzuheben, wenn eine Ausatmung simuliert wird, und abzusenken, wenn eine Einatmung simuliert wird. Ergänzend kann vorgesehen sein, dass eine Abdomennachbildung des Patientensimulators eine heb- und senkbare Bauchplatte aufweist, die von einer Hub- und Senkmechanik der Abdomennachbildung angetrieben wird. Der optische Eindruck einer Schaukelatmung wird hierbei dadurch erreicht, dass sich die Bauchplatte während der Einatmung hebt und sich der Brustkorb gleichzeitig senkt und sich die Bauchplatte bei der Ausatmung senkt und sich der Brustkorb gleichzeitig hebt.

Weiters kann mit dem erfindungsgemäßen Patientensimulator ein Pneumothorax simuliert werden. Der Pneumothorax ist eine gefürchtete Komplikation bei einem unreifen Frühgeborenen. Dabei kommt es zu einem Riss in der Lunge und damit zu einer akuten Notfallsituation. Erkennbar ist dies dadurch, dass sich der Brustkorb auf der betreffenden Seite nicht mehr hebt.

Eine bevorzugte Ausbildung zur Simulation eines Pneumothorax sieht hierbei vor, dass wenigstens ein rechtes heb- und senkbares Brustkorbelement für die rechte Brustkorbhälfte und wenigstens ein linkes heb- und senkbares Brustkorbelement für die linke Brustkorbhälfte vorgesehen sind, die gesondert voneinander heb- und senkbar ausgebildet sind und die jeweils mit einer eigenen ansteuerbaren Hub- und Senkmechanik zusammenwirken, wobei die Hub- und Senkmechanik für das rechte Brustkorbelement und die Hub- und Senkmechanik für das linke Brustkorbelement unabhängig voneinander ansteuerbar sind. Auf Grund der Anordnung von getrennten Hub- und Senkmechaniken für die rechte und die linke Brustkorbhälfte ist es in einfacher Weise möglich einen Pneumothorax sowohl bei Eigenatmung als auch bei jeglicher Form der Beatmung zu simulieren. Hierfür wird nur eine der beiden Hub- und Senkmechaniken (rechts oder links) angesteuert. Dies resultiert in einer einseitigen Hebung des Brustkorbs, was für den Trainingsteilnehmer gut als einseitiger Pneumothorax erkennbar ist.

Eine bevorzugte Ausbildung sieht vor, dass die Hub- und Senkmechanik(en) in der Thoraxnachbildung, insbesondere unter dem wenigstens einen heb- und senkbaren Brustkorbelement, angeordnet ist bzw. sind.

Die Hub- und Senkmechanik kann grundsätzlich beliebig angetrieben werden, z.B. pneumatisch, hydraulisch oder elektrisch. Bevorzugt erfolgt das Anheben und Absenken des Brustkorbelements mit Hilfe eines Elektromotors, zu welchem Zweck die Hub- und Senkmechanik(en) jeweils eine elektromotorische Antriebseinheit aufweist, die bevorzugt einen zu Schwenkbewegungen antreibbaren Arm umfasst. Der Schwenkarm erlaubt eine platzsparende Ausbildung der Hub- und Senkmechanik und ermöglicht gleichzeitig eine Hub- und Senkbewegung mit relativ großem Hub.

In Bezug auf den Lungensimulator ist bevorzugt vorgesehen, dass dieser wenigstens ein Stellelement zur Einstellung der Compliance und Resistance aufweist. Die Nachstellung der Lunge kann hierbei durch eine insbesondere starrwandige Kammer mit einem steuerbaren, das Kammervolumen bestimmenden Kolben gebildet sein, der das nachgestellte Lungenvolumen in Abhängigkeit von Druck und Zeit variieren kann, wobei durch Veränderung der Druckbeaufschlagung des Kolbens sowohl die Compliance als auch die Resistance eingestellt werden können. Bevorzugt ist der Kolben von einem Federelement druckbeaufschlagt, das eine sog. Grundcompliance zur Verfügung stellt, d.h. das Federelement bedingt ein passives Halten des Drucks im Lungensimulator. Zur Veränderung der Druckbeaufschlagung des Kolbens kann ein Federelement vorgesehen sein, das mit dem Kolben zusammenwirkt und dessen Vorspannung veränderbar ist. Zur Veränderung des Kammervolumens kann ein mit dem Kolben zusammenwirkender, insbesondere elektromotorischer oder magnetischer Antrieb vorgesehen sein. Der Antrieb ist vorzugsweise von einem Linearmotor gebildet.

In einer vereinfachten, alternativen Lungensteuerung werden die biologischen Parameter Compliance und Resistance bevorzugt getrennt voneinander geregelt und weisen zumindest jeweils ein Steuerelement für Compliance und Resistance auf. In dieser bevorzugten Ausführungsform wird für die Steuerung der Compliance die Elastizität durch unterschiedliches Spannen der Lungenwand des Simulators gebildet. Die Regelung des Atemwegswiderstands (Resistance) wird getrennt davon mit einem justierbaren oder schnellschaltenden Ventil zur Einstellung des Luftwiderstandes geregelt.

Zur Realisierung der Nachstellung der Verbesserung der Oxygenierung bei einem Surfactant Mangel Syndrom nach der Gabe eines Surfactant-Präparates oder einer Nachstellung dieses Medikaments mit einer Flüssigkeit ist in der Thoraxnachbildung, insbesondere in einer Atemwegsnachbildung, vorzugsweise in der Luftröhrennachbildung, ein Sensor vorgesehen. Bevorzugt ist der Sensor austauschbar in einer Wand der Atemwegsnachbildung eingearbeitet und umfasst ein flüssigkeitsadsorbierendes Material, insbesondere ein Schaummaterial und einen in das Material integrierten Feuchtesensor. Der Sensor detektiert das Einspritzen einer Flüssigkeit, wie z.B. eines Surfactant-Präparates, in den Atemweg und/oder die Lunge, indem das trockene Material, insbesondere Schaummaterial die Flüssigkeit aufsaugt und damit seine elektrische leitende Eigenschaft ändert. Sobald die Gabe des Surfactant-Präparates detektiert wurde, zeigt der Patientensimulator eine Veränderung der pathologischen Parameter und senkt entsprechend eines zeitlichen Verlaufs die Werte von Compliance und Resistance des Lungensimulators entsprechend der klinischen Realität.

Zusätzlich zur sensorischen Funktion der Surfactantsensorik erfüllt der Sensor mit dem Schaummaterial die Funktion eines Schmutzfilters für den Lungensimulator und eröffnet beim Wechseln des Sensors die Möglichkeit den Atemweg durch Spülen mit einer Reinigungsflüssigkeit über einem Reinigungsstopfen zu säubern.

Der wechselbare Feuchtesensor mit einem Schaumstoffkern ist im Atemweg demgemäß zum Detektieren von Flüssigkeiten und Filtrieren der Atemluft integriert.

Zur realistischeren Darstellung eines Atemnotsyndroms kann eine sogenannte interkostale Einziehung der Haut simuliert werden. Bei einem Atemnotsyndrom ist die Einatmung behindert. Durch den im Brustkorb bei der Einatmung entstehenden Unterdruck wird Haut und Gewebe gegen die starreren Anteile (Skelett) in die flexiblen Abschnitte eingezogen. Dies ist vor allem im Bereich der Zwischenrippenräume ("interkostal") sichtbar. Eine bevorzugte Ausbildung der Erfindung sieht in diesem Zusammenhang vor, dass das wenigstens eine heb- und senkbare Brustkorbelement eine Mehrzahl von Rippennachbildungen umfasst und die Thoraxnachbildung eine Hautnachbildung aufweist, welche die Rippennachbildungen überdeckt und gemeinsam mit dem wenigstens einen heb- und senkbaren Brustkorbelement heb- und senkbar ist, wobei am wenigstens einen heb- und senkbaren Brustkorbelement ein an der Hautnachbildung angreifendes Zug- oder Druckmittel, wie z.B. wenigstens ein Faden oder ein stabförmiges Zugelement, befestigt ist und wobei das wenigstens eine heb- und senkbare Brustkorbelement ein Antriebselement, insbesondere einen Elektromotor zum Verlagern des Zugmittels trägt, um eine interkostale Einziehung der Hautnachbildung zu bewirken. Dadurch, dass das Antriebselement zum Verlagern des Zugmittels am heb- und senkbaren Brustkorbelement angeordnet bzw. befestigt ist, wird das Antriebselement bei den die (Be-)Atmung simulierenden Hub- und Senkbewegungen des Brustkorbelements mitbewegt, sodass die Simulation der interkostalen Einziehung unabhängig von der aktuellen Hebestellung des Brustkorbelements vorgenommen werden kann.

In einer weiteren Ausführungsform kann die Einziehung durch magnetische Kraftwirkung erfolgen indem in die Haut magnetische Elemente eingearbeitet sind und diese durch elektrisch angesteuerte Magnetspulen in mindestens einem Interkostalraum atemsynchron angezogen werden.

Weiters kann bevorzugt vorgesehen sein, dass der Patientensimulator dazu ausgebildet ist, den pathologischen Zustand der nekrotisierenden Enterokolitis zu simulieren. Die nekrotisierende Enterokolitis (NEC) ist eine z.T. dramatisch verlaufende Erkrankung des Darmes, die als Komplikation bei der Behandlung von Frühgeborenen gefürchtet ist. Sie stellt in dieser Patientengruppe die häufigste akute Erkrankung des Magen-Darm-Traktes dar mit zum Teil dramatischen Folgen für das Frühgeborene. Durch eine verminderte Durchblutung (Minderperfusion) der Darmwand im Zusammenhang mit einer Infektion kommt es bei der NEC zu einem Gewebsuntergang (Nekrose) in der Darmwand. Diese tritt meist im Bereich des terminalen Ileum und des Colon ascendens auf und geht häufig mit der Bildung von Fäulnisgasen in der Darmwand (Pneumatosis intestinalis) einher. Mit Zunahme der Schädigung kann die Darmwand perforieren und es kommt zu einem Austritt von Darminhalt in die freie Bauchhöhle. Entzündungsreaktion, Peritonitis und Sepsis sind die Folge.

Klinisches Zeichen einer nekrotisierenden Enterokolitis ist ein z.T. massiv geblähter Bauch mit erweiterten Darmschlingen, eine fehlende Peristaltik und daher fehlende Darmgeräusche. Die lokale Infektion mit einem Austritt von Darminhalt führt zu einer lividen (weiß, gräulich, bläulichen) Verfärbung der Bauchhaut und zu einem Hervortreten der Venenzeichnung in diesem Bereich unterschiedlicher Ausprägung. Als Folge der Blähung des Darmes und damit des gesamten Bauches kommt es mitunter zu einer massiven Einschränkung der Spontanatmung, da der überblähte Bauch die Lunge nach oben in den Thorax drückt und so komprimiert. Dadurch wird die Spontanatmung häufig massiv beeinträchtigt. Daher müssen Frühgeborene mit einer schweren NEC häufig akut intubiert und maschinell beatmet werden.

Zur Simulation der NEC ist der Patientensimulator ausgebildet, um die nachfolgenden Vorgänge auszuführen. Die Simulation der Blähung und Verhärtung des Bauchs erfolgt mittels der Anhebung der Bauchplatte. Hierzu wird die Bauchplatte in die Maximalposition gestellt und in dieser gehalten. Wird von außen eine Kraft ausgeübt, ist bevorzugt vorgesehen, dass der Antrieb der Bachplattenanhebung eine einstellbare, maximale Gegenkraft ausübt, um die Verhärtung zu simulieren. Gleichzeitig erfolgt über die physiologischen Regelkreise des Lungenmodells bevorzugt eine Verminderung der Compliance der Lunge. Das Lungenvolumen wird reduziert und für die Beatmung wird ein höherer Beatmungsdruck notwendig. Die ggf. vorgesehene Umsetzung der Verfärbung des Simulators erfolgt bevorzugt durch farbige LEDs, welche die Hautnachbildung des Simulators im Bauchbereich von innen beleuchten und in der geforderten Farbe schimmern lassen. Diese LEDs können die Grundfarben rot, grün und blau entsprechend der Vorgabe mischen um eventuelle Verfärbungen in der Silikonhaut ausgleichen. Zur Simulation der hervortretenden Gefäßzeichnung werden die Gefäße an der Innenseite der Hautnachbildung deckend koloriert bzw. in die Wandung der Hautnachbildung eingearbeitet. Unter der direkten oder diffusen Beleuchtung durch die LEDs der Hebeplatte werden diese Gefäßnachbildungen durch die gespannte Haut dann sichtbar.

Ein unabhängiger, zweiter Aspekt der vorliegenden Erfindung, der mit jedem beliebigen anderen Aspekt der Erfindung kombiniert werden kann, sieht in diesem Zusammenhang einen Patientensimulator, insbesondere Frühgeborenensimulator, vor, umfassend einen Lungensimulator und eine Abdomennachbildung, die eine heb- und senkbare Bauchplatte aufweist, die von einer Hub- und Senkmechanik angetrieben wird, wobei eine Steuervorrichtung dazu eingerichtet ist, die Bauchplatte anzuheben und gleichzeitig den Beatmungswiderstand des Lungenmodels zu erhöhen. In bevorzugter Weise ist hierbei vorgesehen, dass die Abdomennachbildung einschließlich der Bauchplatte von einer Hautnachbildung überspannt ist, deren Innenseite von in der Abdomennachbildung angeordneten Leuchtmitteln beleuchtbar ist.

Weiters kann der erfindungsgemäße Patientensimulator ausgebildet sein, um das Symptom des "Head Bobbing" zu simulieren, einem Zeichen einer erhöhten Atemarbeit bei Früh- und Neugeborenen. Die Erniedrigung der Compliance der Lunge führt dabei durch die Aktivität der Atemhilfsmuskulatur im Bereich des Kopfes (M. sternocleidomostoideus) zu ruckartigen, atemsynchronen Vorwärtsbewegungen des Kopfes mit jeder Inspiration. Zur Simulation dieses Symptoms kann ein Servomotor oder ein vergleichbares Antriebselement vorgesehen sein, der unter Vermittlung eines Gestänges oder eines vergleichbaren flexiblen Umsetzungselements, wie ein Seilzug, den Winkel zwischen der Kopfnachbildung und der Thoraxnachbildung des Simulators ändert. Diese Bewegung wird vorzugsweise über die zentrale Steuerung mit der Atemtätigkeit synchronisiert.

Die technische Umsetzung des "head bobbing" erfolgt beispielsweise über zwei Bowdenzüge, die symmetrisch an der linken und rechten Seite der Atemwegsnachbildung verlaufen, sowie auf Grund der Rückstellkraft der gespannten Silikonkomponenten des Simulators.

Ein unabhängiger, dritter Aspekt der vorliegenden Erfindung, der mit jedem beliebigen anderen Aspekt der Erfindung kombiniert werden kann, sieht in diesem Zusammenhang einen Patientensimulator, insbesondere Frühgeborenensimulator, vor, umfassend einen Lungensimulator, eine Thoraxnachbildung, die ein heb- und senkbares Brustkorbelement aufweist, das von einer Hub- und Senkmechanik angetrieben wird, und eine Kopfnachbildung, die mit einer Kippmechanik zu Änderung des Winkels zwischen Kopfnachbildung und Thoraxnachbildung zusammenwirkt, wobei eine Steuervorrichtung dazu eingerichtet ist, die Kippmechanik zu einer periodischen Kippbewegung der Kopfnachbildung anzutreiben, wobei die periodische Kippbewegung mit der Heb- und Senkbewegung des Brustkorbelements synchronisiert ist.

Gemäß einem vierten, unabhängigen Aspekt der Erfindung, der ggf. bei einem Patientensimulator gemäß dem ersten, zweiten oder dritten Aspekt der Erfindung realisiert werden kann, ist ein Patientensimulator, insbesondere Frühgeborenen-, Neugeborenen- oder Kindersimulator, vorgesehen, umfassend eine Kopfnachbildung umfassend eine Schädelnachbildung, die von einer Hautnachbildung überdeckt ist, wobei wenigstens eine Lichtquelle in und/oder an der Schädelnachbildung angeordnet ist. Dadurch kann im Kopfbereich eine Verfärbung der Haut bzw. Hautnachbildung simuliert werden. Im Falle einer Blauverfärbung kann beispielsweise eine Zyanose simuliert werden. Die Zyanose zeigt eine verminderte Sauerstoffsättigung des Blutes an und kann bei akutem Auftreten ein Symptom für eine lebensbedrohliche Störung sein. Früh- und Neugeborene haben in den ersten Lebensminuten nach der Geburt physiologischerweise noch eine Zyanose. Diese zeigt sich vor allem im Bereich des Kopfes und des Stamms. Mit zunehmender Effektivität der Atmung verschwindet die Zyanose dann in den ersten Lebensminuten. Bleibt sie darüber hinaus bestehen, kann dies ein wichtiges Zeichen eines pathologischen Zustandes sein. Dieser kann sowohl die Atmung als auch die Herz-Kreislauffunktion (z.B. angeborener Herzfehler) betreffen. Weiters kann die Lichtquelle auch eine Rotfärbung/Rötung des Kopfes simulieren, welche beispielsweise bei einer Hyperoxie, d.h. einem Überangebot an Sauerstoff und einer damit verbundenen Erhöhung des Sauerstoffpartialdrucks im Blut, auftritt. Für die Versorgung eines Früh- und Neugeborenen sind die Zyanose und Hyperoxie damit entscheidende klinische Parameter, die das Handeln des versorgenden Teams entscheidend beeinflussen.

Dadurch, dass die wenigstens eine Lichtquelle in und/oder an der Schädelnachbildung angeordnet ist, wird das Licht nicht direkt in die Hautnachbildung eingeleitet, was lediglich zu einem punktuellen, örtlich begrenzten Lichteffekt an der Haut führen würde, sondern es kommt in Folge der Lichteinbringung in die Schädelnachbildung dort zu einer Lichtverteilung, sodass ein größerer Flächenbereich der Hautnachbildung relativ gleichmäßig von innen beleuchtet wird. Dies führt zu einer realistischen Simulation einer Veränderung der Hautfarbe des Patientensimulators. Im Gegensatz dazu würde die direkte Platzierung von Lichtquellen, wie z.B. LEDs, unter der Haut zwar zu einem deutlichen, aber insgesamt unrealistischen Bild führen. Die punktuelle Zyanose am Ort der Lichtquellenplatzierung z.B. an den Wangen oder im Mund, wäre physiologisch nicht korrekt und würde unnatürlich wirken.

Eine bevorzugte Ausführungsform sieht vor, dass die wenigstens eine Lichtquelle von einer RGB-LED gebildet ist, deren Farbkanäle unabhängig voneinander einzeln ansteuerbar sind. Die Verwendung von mehrfarbigen RBG-LEDs erlaubt in einfacher Weise die Umsetzung von unterschiedlichen Farbnuancen. Derartige LEDs verfügen vorzugsweise über mindestens drei einzelne LED-Elemente unterschiedlicher Farbe. Zur Abdeckung des gesamten Spektrums des sichtbaren Lichts (und damit v.a. der unterschiedlichen Nuancen für die Zyanose und die Hyperoxie) werden bevorzugt die drei LED-Farben rot, grün und blau der LED-Quelle additiv gemischt. Auf Grund von Entwicklungen für den Mikroelektronikbereich stehen gegenwärtig unterschiedliche Möglichkeiten für die Ansteuerung der RGB-LEDs zur Verfügung, die von der Anwendung der Kombination von einzelnen LED-Bauteilen mit diskreter Ansteuerung bis hin zu hochintegrierten Bausteinen mit einer digitalen Steuerleitung für die Einstellung der Farbtemperatur reichen. Ein weiterer Vorteil von RGB-LEDs ist die platzsparende Aufbaumöglichkeit von mehreren Leuchtelementen, insbesondere wenn diese über einen seriellen Bus in Serie miteinander kaskadiert werden können. Bei der seriellen Verkabelung ist lediglich eine Steuerleitung für die Programmierung der Module notwendig, wobei sich das serielle Datensignal aus jeweils z.B. acht Bit pro Farbe jedes Leuchtmodules zusammensetzt und die Informationen durch alle Module durchgereicht werden. Es ergibt sich somit, dass, entsprechend der Modulanzahl, eine gleiche Anzahl von 3 Farb-Bytes generiert werden muss, um alle Module in der Kette mit einer Farbinformation zu setzen.

Der gesamte Farbumfang der RGB-LEDs umfasst bevorzugt > 4 Mio, insbesondere > 16 Mio möglicher Farben und umfasst damit das gesamte sichtbare Farbspektrum von weiß bis schwarz. Dadurch gelingt bei Wahl einer geeigneten Farbe in einfacher Weise eine realistische Färbung der Hautnachbildung. Für das Management der Farbsteuerung und den Datenaustausch ist bevorzugt ein eigener Mikrokontroller vorgesehen, der von einer Hauptsteuerung Steuerbefehle erhält und diese an die einzelnen RGB-LEDs durchreicht.

Für die Realisierung einer Hautverfärbung im Stirnbereich der Kopfnachbildung ist es bevorzugt, wenn eine Lichtquelle an der Innenoberfläche der Schädeldecke der Schädelnachbildung angeordnet ist. Die dadurch erzielte indirekte Beleuchtung im Inneren der Schädelnachbildung führt zu einer homogen, gleichmäßigen Lichtverteilung. Hierfür kann das dafür vorgesehene LED-Modul vorzugsweise medial an der Schädelbasis verklebt werden und beleuchtet so indirekt den Innenteil der Schädeldecke. Die über die bevorzugt in weißer Farbe ausgebildete Schädelnachbildung auftretende Reflexion leuchtet so den gesamten Stirnbereich und die Seitenpartien des Schädels homogen aus. In Kombination mit einer Wangenbeleuchtung führt dies zu einer gleichmäßigen Ausleuchtung des gesamten oberen Kopfbereiches. Als Resultat ergibt sich dadurch eine äußerst realistische Darstellung der Zyanose und Hyperoxie im Kopfbereich.

Für die Realisierung einer Hautverfärbung in der nasalen Mundpartie der Kopfnachbildung ist es bevorzugt, dass eine Lichtquelle in der Schädelnachbildung die mittlere Schädelgrube von innen anleuchtend angeordnet ist. Durch die direkte Beleuchtung der Schädelknochen der Schädelnachbildung aus dem Inneren der Schädelnachbildung, im Bereich der mittleren Schädelgrube, ergibt sich eine homogene und realistische Lichtverteilung, die an den Grenzflächen zwischen der Schädelnachbildung und der Hautnachbildung abstrahlt. Dies führt zu äußerst realistischen Färbungen im Bereich der nasalen Mundpartie. Auch im Hinblick auf die Serienfertigung bedeutet die Bestrahlung der Knochen aus dem Schädelinneren einen deutlichen Vorteil. Die Lichtmodule sind so vor jeglicher mechanischer Beanspruchung geschützt und lassen sich leicht konstruieren und austauschen. Neben der guten Lichtverteilung und Vorteilen für die Serienfertigung und Haltbarkeit, ergibt sich weiters eine Reduktion des Energiebedarfs für die Lichtquelle, da sich bei dieser Methode keine Energieverluste durch den Anschluss eines Lichtwellenleiters über einen Adapter ergeben.

Eine homogene Ausleuchtung der Hautnachbildung wird bevorzugt dadurch erreicht, dass die Schädelnachbildung aus einem polymeren, transluzenten, insbesondere weißen, Werkstoff besteht und die Hautnachbildung transparent oder transluzent, insbesondere aus einem Silikonwerkstoff, ausgebildet ist.

Für die Beleuchtung schwer zugänglicher Bereiche, z.B. Mund- und Kinnzone, aufgrund beschränkter Platzverhältnisse ist die Verwendung von Lichtleitern vorteilhaft. Die Platzverhältnisse sind insbesondere dann beschränkt, wenn die Kopfnachbildung eine Nachbildung der oberen Atemwege umfasst. Eine bevorzugte Ausbildung sieht in diesem Zusammenhang vor, dass eine Lichtquelle mit einem Lichtwellenleiter verbunden ist, der sich bogenförmig im Kinnbereich der Kopfnachbildung erstreckt und zur Abstrahlung von Licht entlang des Bogens ausgebildet ist, wobei der lichtabstrahlende bogenförmige Bereich des Lichtwellenleiters vorzugsweise zwischen der Hautnachbildung und einer Atemwegsnachbildung bzw. dem Unterkiefer angeordnet ist. Die Abstrahlung im bogenförmigen Bereich wird dabei mit Vorteil durch eine Aufrauhung und/oder Einkerbung der äußeren Oberfläche des Lichtwellenleiters erreicht. Dadurch wird außerdem eine diffuse und flächige Abstrahlung erzielt. Bevorzugt ist der Lichtwellenleiter so angeordnet, dass der lichtabstrahlende bogenförmige Bereich parallel zu einer Unterkiefernachbildung geführt ist.

Gemäß einem fünften, unabhängigen Aspekt der Erfindung, der ggf. bei einem Patientensimulator gemäß einem der vorangehenden Aspekte der Erfindung realisiert werden kann, ist ein Patientensimulator, insbesondere Frühgeborenen-, Neugeborenen- oder Kindersimulator, vorgesehen umfassend eine Kopfnachbildung mit einer Nasennachbildung mit zwei flexiblen Nasenflügeln, wobei an den Nasenflügeln ein in das Innere der Kopfnachbildung führendes Antriebselement, wie z.B. wenigstens ein Faden oder Hebel, angreift, um eine Aufweitung und Verengung der Nasenflügel zu simulieren. Das sog. "Nasenflügeln" zeigt sich als atemsynchrones Weiten der Nasenflügel bei der Einatmung und stellt ein Symptom eines Atemnotsyndroms dar.

Die Betätigung der Nasenflügelbewegung erfolgt bevorzugt dadurch, dass eine Hebelmechanik mit einem Antriebselement, beispielsweise einem Elektromagneten, zum Bewegen des Hebels zusammenwirkt. Die Hebelmechanik ist dabei so aufgebaut, dass beim Aktivieren des Elektromagneten sich die entgegengesetzten Hebelenden entgegengesetzt bewegen und damit beim Anziehen der Hebel zum Magneten sich die Enden in den Nasenflügeln abspreizen. Beim Aktivieren des Magneten kommt es dadurch zu einem Erweitern der Nasenlöcher. Beim Deaktivieren des Elektromagneten kommt es zu einer Rückstellung der Nasenflügel aufgrund der elastischen Ausführungen der Nasenflügel mit einem entsprechenden Kunststoff.

Eine atemsynchrone Bewegung der Nasenflügel wird bevorzugt dadurch erreicht, dass eine zentrale Steuervorrichtung vorgesehen ist, die zur Ansteuerung der Heb- und Senkmechanik der Thoraxnachbildung und zur Ansteuerung des Antriebselements der Nasenflügel derart ausgebildet ist, dass das Aufweiten der Nasenflügel und das Anheben des wenigstens einen heb- und senkbaren Brustkorbelements synchron erfolgen.

Ein sechster, unabhängiger Aspekt der Erfindung befasst sich mit einem weiteren Problem, das bei Patientensimulatoren besteht. Zur Beurteilung der Lunge und des Herzens sowie des Abdomens ist es für Trainingszwecke vorteilhaft, Geräusche mit Hilfe eines Stethoskops abhören zu können. Bei herkömmlichen Patientensimulatoren wird dies durch den Einbau von Lautsprechern im Bereich der jeweiligen Organe bewerkstelligt. Dies hat allerdings deutliche Nachteile. Meist handelt es sich um lediglich einen Lautsprecher für das Herz, zwei Lautsprecher für die Lunge und ggf. einen Lautsprecher für Darmgeräusche über dem Abdomen. Dies führt dazu, dass der Benutzer den Lautsprecher, der von außen nicht sichtbar ist, genau treffen muss, um die Geräusche deutlich abhören zu können. Aber auch wenn der Benutzer die Position des gewünschten Lautsprechers trifft, sind meist Nebengeräusche der Simulatormechanik ebenfalls zu hören, die irritieren und letztlich kein korrektes Abhören ermöglichen.

Zur Überwindung dieser Nachteile ist gemäß einem sechsten, unabhängigen Aspekt der Erfindung, der ggf. bei einem Patientensimulator gemäß einem der vorangehenden Aspekte der Erfindung realisiert werden kann, ein Patientensimulator, insbesondere Frühgeborenen-, Neugeborenen- oder Kindersimulator, vorgesehen umfassend eine Thoraxnachbildung, eine Abdomennachbildung, einen Stethoskopsimulator und einen Audiogenerator, wobei die Thoraxnachbildung und die Abdomennachbildung wenigstens zwei Abstandssensoren aufweisen, die mit einem Stethoskopkopf des Stethoskopsimulators zur Ermittlung der Position des Stethoskopkopfs zusammenwirken, wobei die ermittelten Positionsdaten dem Audiogenerator zuführbar sind, wobei der Audiogenerator einen Speicher für Audiodateien und eine Verarbeitungseinrichtung zum Abmischen der Audiodateien in Abhängigkeit von den Positionsdaten zu einem abgemischten Audiosignal aufweist, das einem Ohrhörer des Stethoskopsimulators zuführbar ist. Unter einem Abstandssensor wird hierbei ein Sensor verstanden, der ein dem Abstand, insbesondere sphärischen Abstand zwischen dem Sensor und dem Stethoskopkopf proportionales Signal ausgibt. Die Position des Stethoskopkopfs kann auf Grundlage der Abstandsdaten vorzugsweise durch mathematische Triangulation ermittelt werden, um Positionsdaten zu erhalten. Die Errechnung der Positionsdaten aus den Abstandsdaten kann dabei entweder in der Patientennachbildung oder extern erfolgen. Der Audiogenerator ist vorzugsweise außerhalb der Patientennachbildung angeordnet. Der Erfindung liegt somit die Idee zugrunde, die zu auskultierenden Geräusche nicht im Patientensimulator zu generieren, sondern dass nur die Position des Stethoskops im Patientensimulator erfasst wird und die Geräusche entsprechend der Position im Stethoskop selbst oder in einer externen Einheit generiert werden.

Bevorzugt ist hierbei vorgesehen, dass der Simulator einen Nahfeldsender und das Stethoskop einen resonanten Empfängerkreis aufweist. Der Nahfeldsender des Simulators erzeugt dabei ein elektromagnetisches Nahfeld mit einer vorgegebenen Frequenz. Beispielsweise wird eine definierte Trägerfrequenz von beispielsweise 100kHz verwendet.

Im Simulator selbst befinden sich Senderspulen, die auf die Trägerfrequenz abgestimmt sind. In Abhängigkeit von der Entfernung zum Empfänger verändert sich die Resonanzfrequenz und Amplitude im zugehörigen Schwingkreis. Die auf diese Weise gewonnenen, durch die Amplitude und Frequenz repräsentierten Abstandsdaten werden zur Positionsbestimmung ausgewertet und das Ergebnis dem Audiogenerator zugeführt, in dem eine Verarbeitungseinrichtung dafür sorgt, dass gespeicherte Audiodateien in Abhängigkeit von der Position zu einem gemeinsamen Audiosignal abgemischt werden, das einem Ohrhörer des Stethoskopsimulators zuführbar ist. Die Abstands- bzw. Positionsdaten können dem Audiogenerator vorzugweise als analoge Signale zugeführt werden, wodurch eine Gewichtung der Lautstärke der Audiodateien, wie Geräusche der Lungenflügel, des Herzens, des Magens, sowie artifizielle Nebengeräusche in Abhängigkeit von einem korrekten, ruhigen Aufsetzten des Stethoskops erfolgen kann und die Audiodateien zu einem resultierenden Audiosignal gemischt werden können. Daher ergibt sich für den Schulungsteilnehmer die Situation, dass bei der Positionierung des Stethoskopsimulators auf den linken Brustkorb ein klares Lungengeräusch abgemischt wird bzw. bei herznaher Positionierung primär Herztöne abgemischt werden.

Alternativ kann vorgesehen sein, dass der Nahfeldsender im Stethoskop und der Empfängerkreis im Simulator angeordnet ist. Die Umsetzung des Senders und Empfängers ist demgemäß je nach Anwendung austauschbar.

Der Audiogenerator kann entweder in einer Stethoskopnachbildung des Stethoskopsimulators oder in einer von der Patientennachbildung des Patientensimulators und von der Stethoskopnachbildung gesonderten, externen Einheit angeordnet sein. Das von dem in einer externen Einheit angeordneten Audiogenerator abgemischte Audiosignal kann vorzugsweise mittels drahtloser Datenübertragung, wie z.B. Bluetooth drahtlos in eine Empfangseinheit des Stethoskopsimulators übertragen und daher ohne unangenehme Nebengeräusche über einen integrierten Ohrhörer gehört werden.

Eine bevorzugte Ausbildung sieht vor, dass für jede Position auf der Thorax- bzw. Abdomennachbildung wenigstens ein Audiosignal abmischbar ist, das Geräusche des menschlichen Körpers an der entsprechenden Position repräsentiert. Die Geräusche werden dabei in Abhängigkeit von der Stethoskopkopfposition gewichtet aus mindestens einer gespeicherten Audiodatei abgemischt und im Stethoskop ausgegeben.

Die einzelnen Audiodateien repräsentieren dabei jeweils eine simulierte Geräuschquelle, wie z.B. ein Herzgeräusch, ein Lungengeräusch, ein Magengeräusch und dgl., und sind daher der Position der jeweiligen Geräuschquelle zugeordnet. Weiters ist die Verarbeitungseinrichtung zum Abmischen der Audiodateien mit Vorteil so ausgebildet, dass eine Audiodatei dem abgemischten Signal mit einer umso größeren Lautstärke hinzugeführt wird, je geringer der Abstand des Stethoskopkopfs von der dieser Audiodatei bzw. dieser simulierten Geräuschquelle zugeordneten Position ist.

Bei der Generierung des abgemischten Audiosignals können zusätzlich zu den Positionsinformationen weitere Parameter berücksichtigt werden. Beispielsweise ist es vorteilhaft, wenn das Herzgeräusch so angepasst wird, dass es die Herzfrequenz erkennen lässt.

Dasselbe gilt in Bezug auf die Lungengeräusche für die Atemfrequenz. Weiters können die Geräusche naturgemäß in Abhängigkeit von pathologischen Zuständen variieren. Eine bevorzugte Ausbildung der Erfindung sieht in diesem Zusammenhang vor, dass jede Audiodatei mit physiologischem Geräusch durch eine Audiodatei mit pathologischem Geräusch ersetzt werden kann und diese für die Ausgabe des positionsgebundenen Audiosignals entsprechend der Stethoskopkopfposition abgemischt wird.

Um die verschiedensten Geräuschquellen des menschlichen Körpers möglichst realistisch wiedergeben zu können, ist bevorzugt vorgesehen, dass zumindest eine Audiodatei ein Herzgeräusch simuliert und daher der Position des Herzens der Thoraxnachbildung zugeordnet ist, dass eine Audiodatei ein erstes Lungengeräusch simuliert und daher der Position des linken Lungenflügels der Thoraxnachbildung zugeordnet ist, dass eine Audiodatei ein zweites Lungengeräusch simuliert und daher der Position des rechten Lungenflügels der Thoraxnachbildung zugeordnet ist und/oder dass eine Audiodatei ein Magengeräusch simuliert und daher der Position des Magens der Abdomennachbildung zugeordnet ist.

Allgemein ist bei jedem der oben beschriebenen Aspekte der Erfindung bevorzugt vorgesehen, dass der Patientensimulator einen vollständigen Körper des jeweiligen Patienten, d.h. insbesondere eines Frühgeborenen, eines Neugeborenen oder Kindes darstellt und daher neben einer Thorax-, einer Abdomen-, einer Kopfnachbildung auch Nachbildungen der Extremitäten umfasst. Weiters ist der Patientensimulator in seinen Abmessungen und in Bezug auf die Größenverhältnisse seiner nachgebildeten Körperteile so ausgebildet, dass er den Abmessungen und den Größenverhältnissen eines realen Patienten, d.h. eines menschlichen Frühgeborenen, Neugeborenen oder Kindes entspricht.

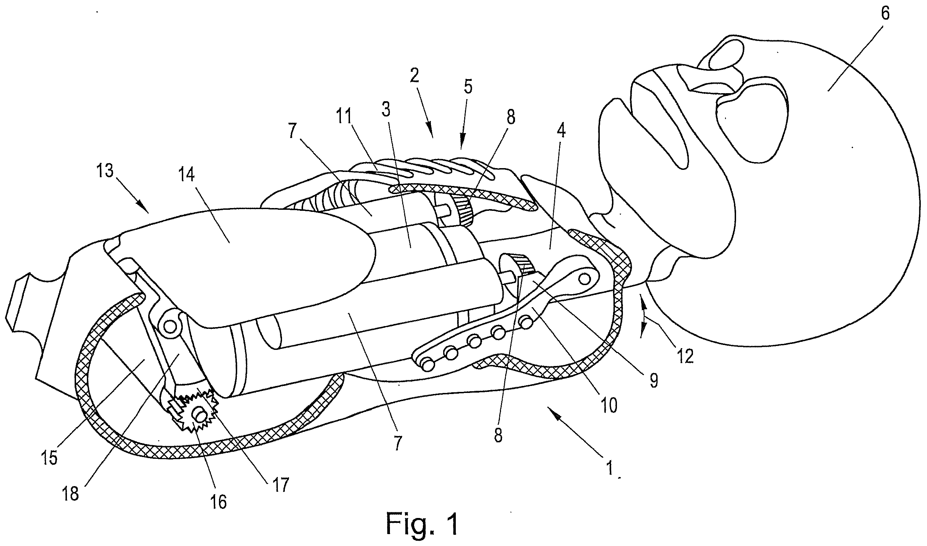

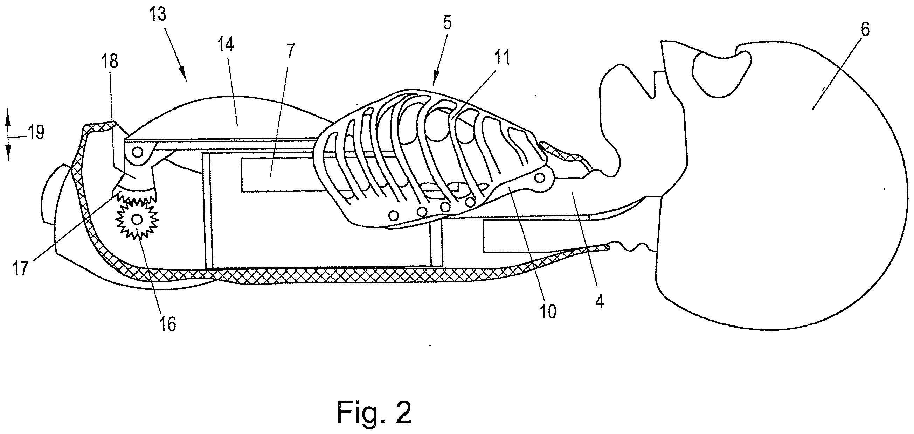

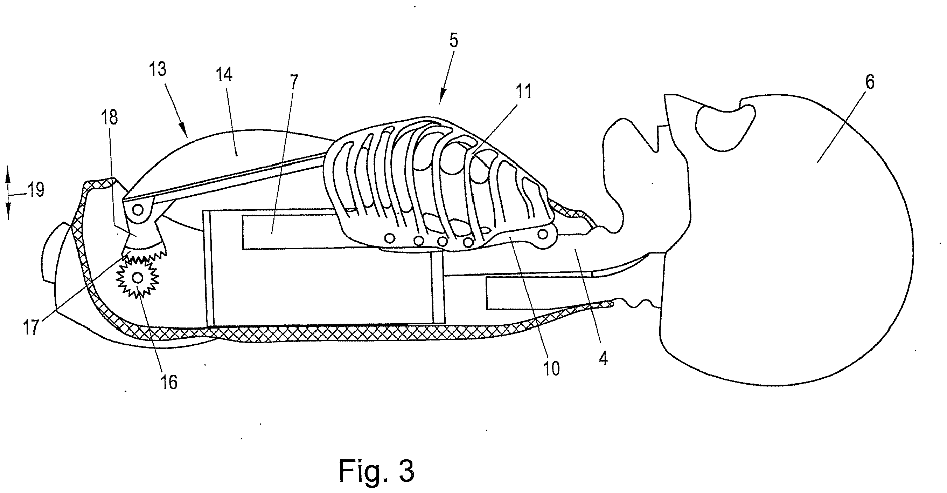

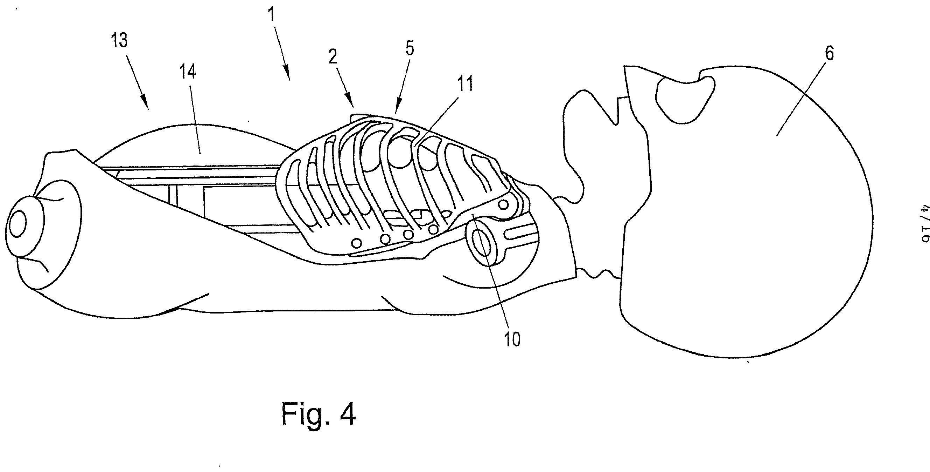

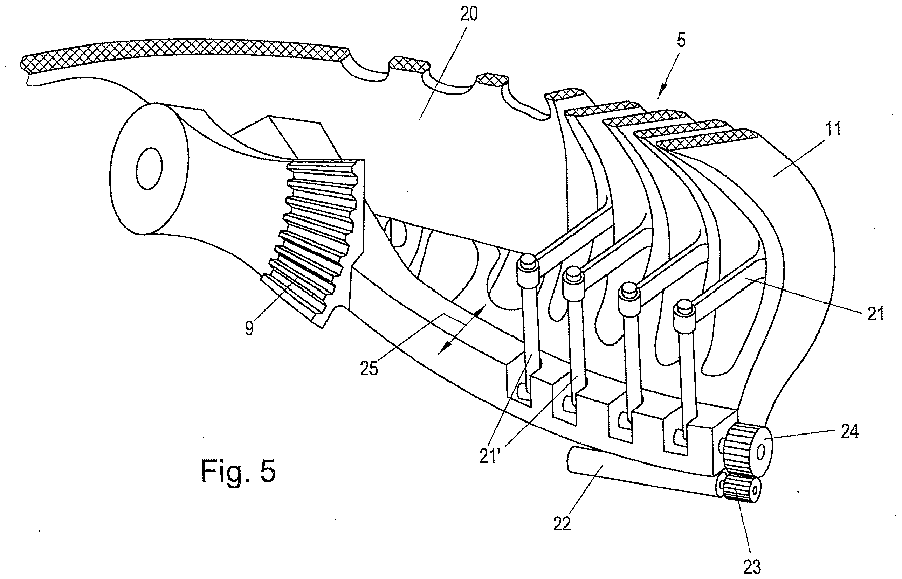

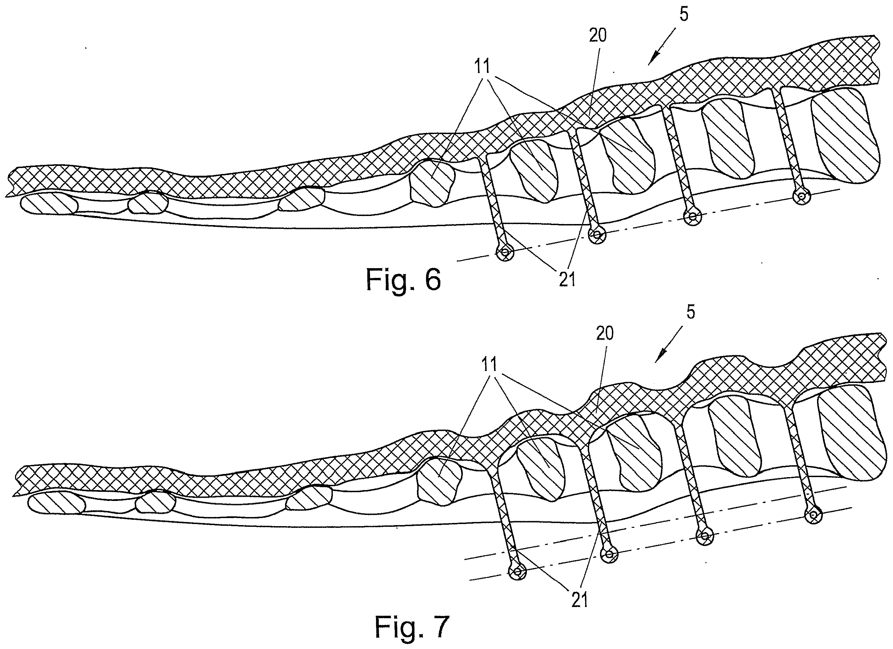

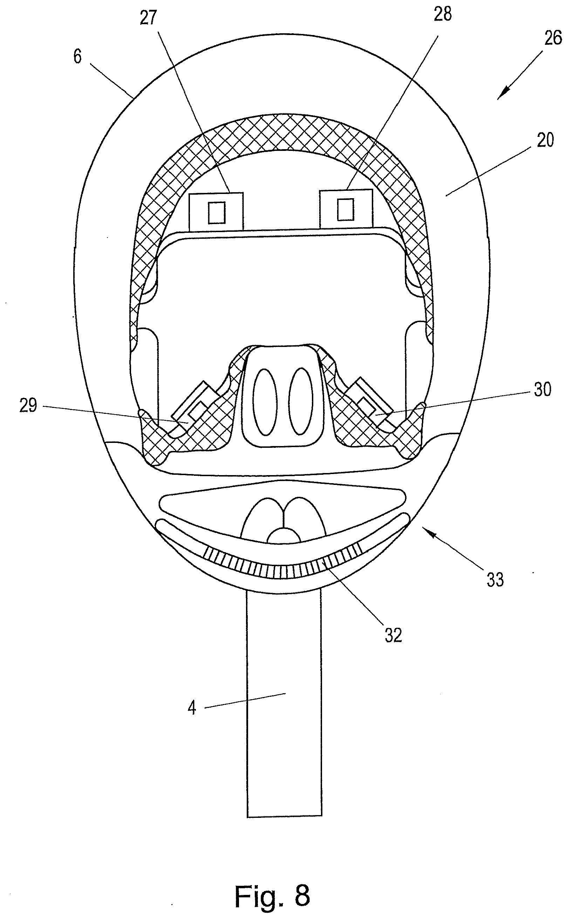

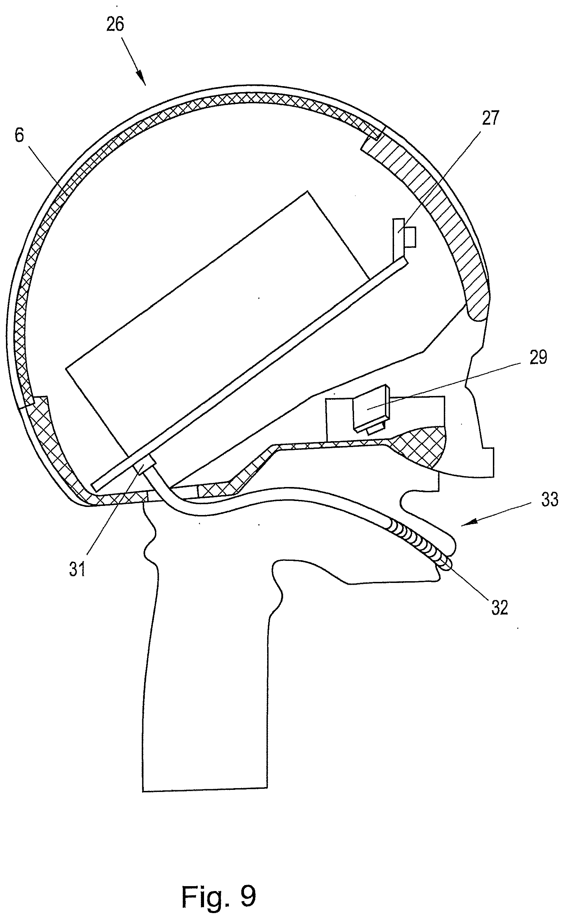

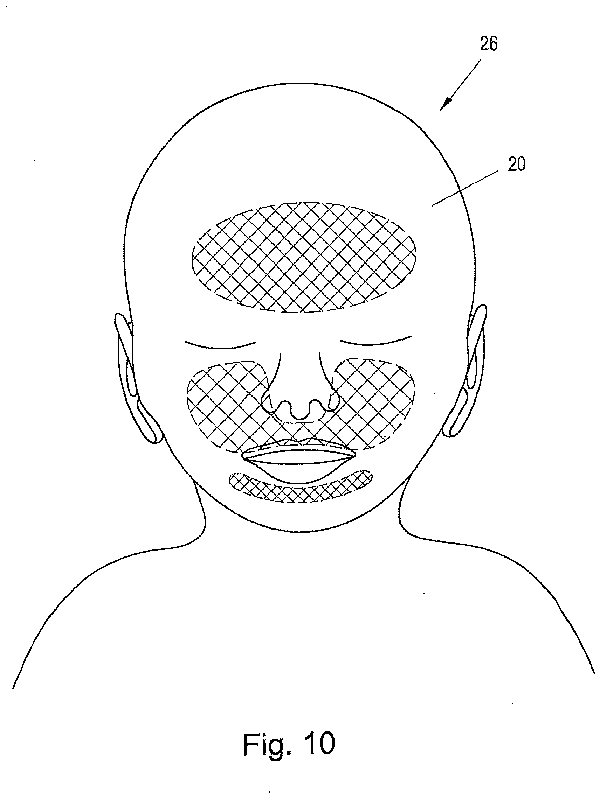

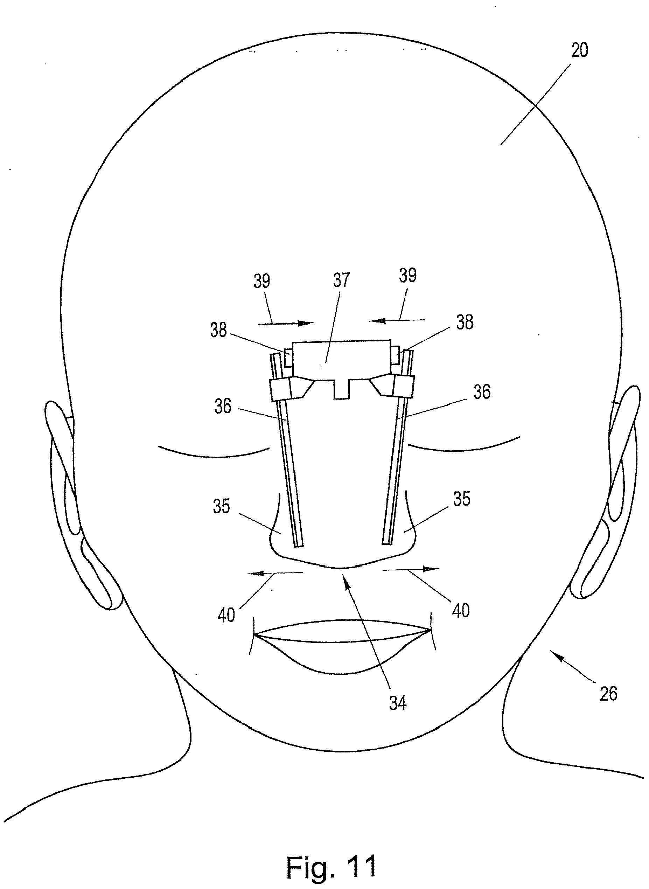

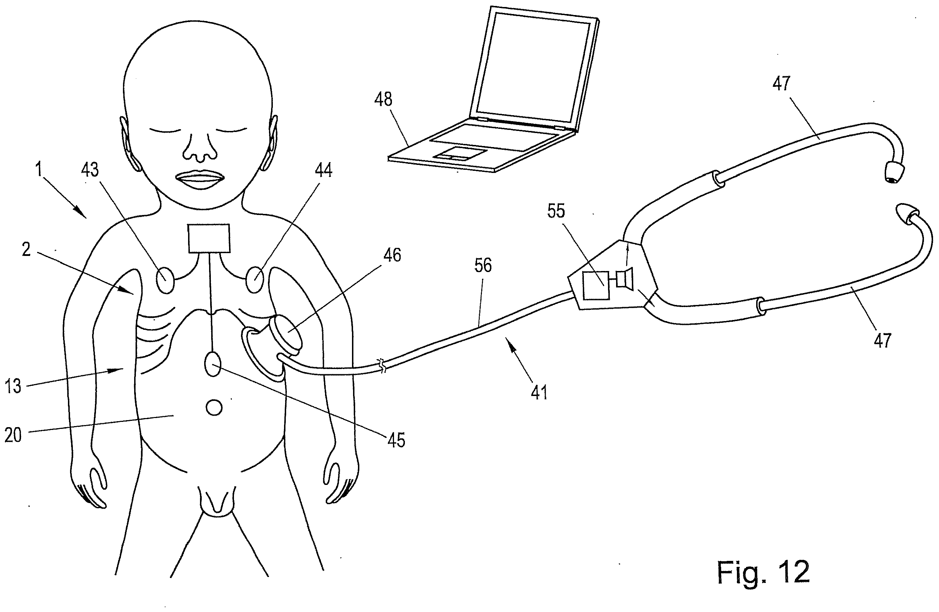

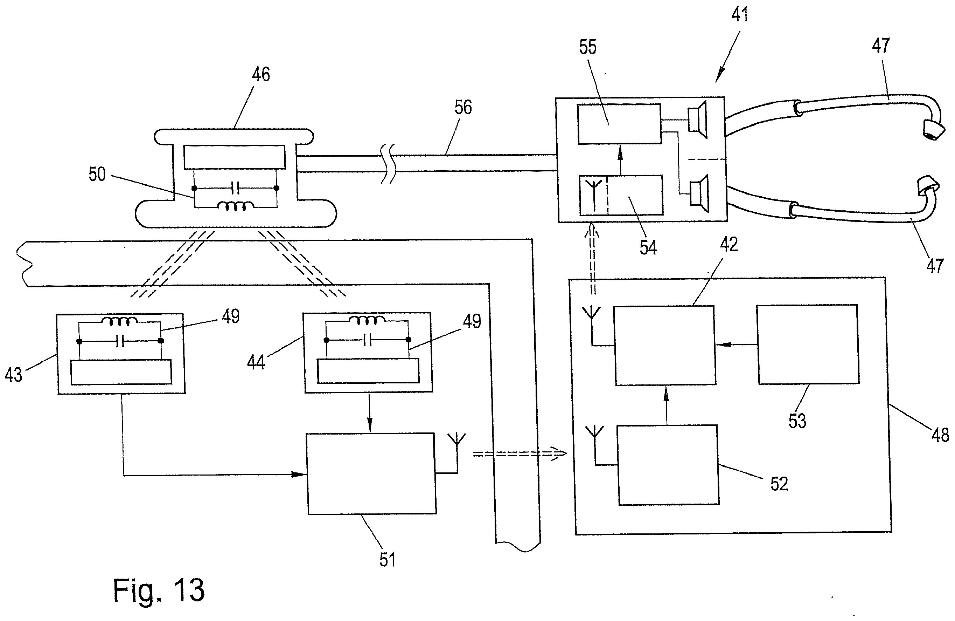

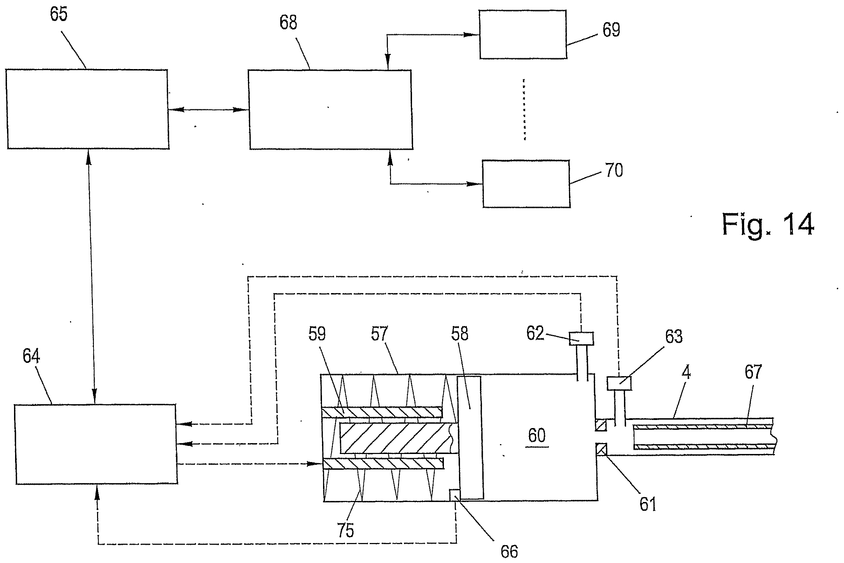

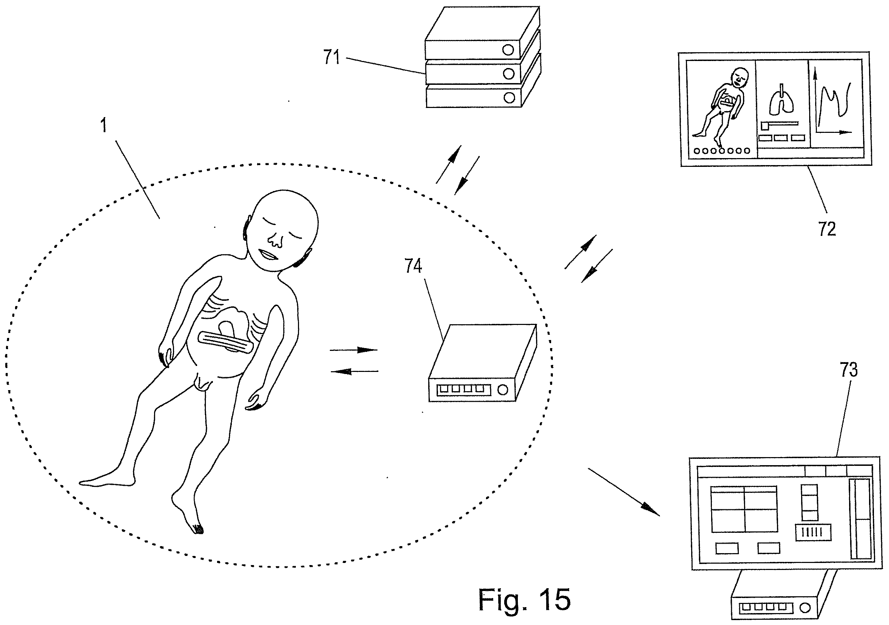

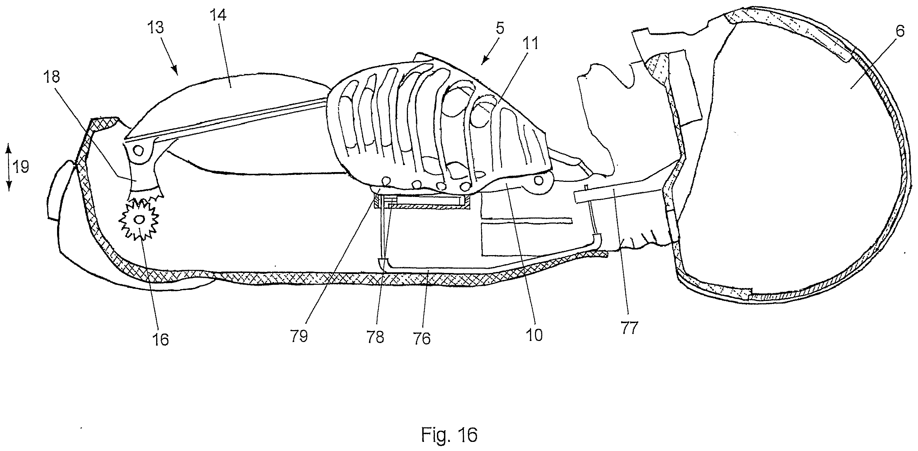

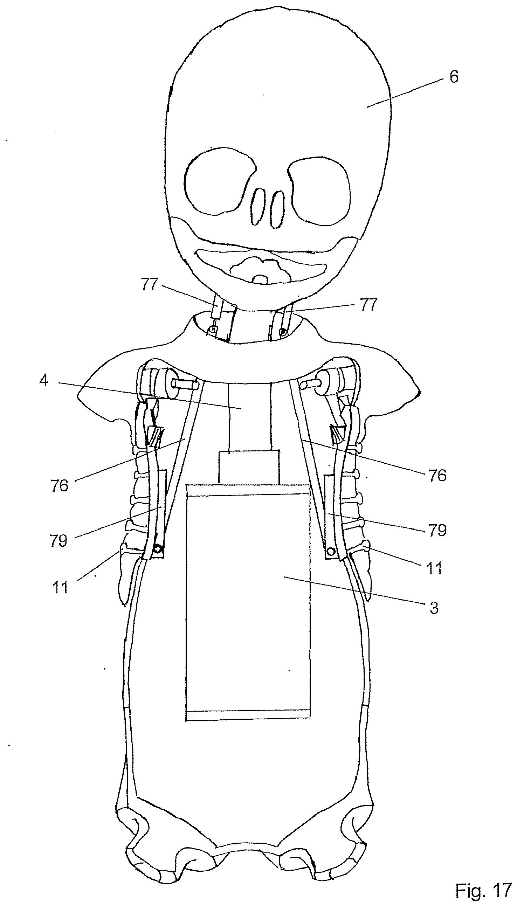

Die Erfindung wird nachfolgend anhand von in der Zeichnung schematisch dargestellten Ausführungsbeispielen näher erläutert. In dieser zeigt Fig.1 einen Frühgeborenensimulator in teilweise geöffneter Darstellung, Fig. 2 und Fig. 3 den Frühgeborenensimulator mit einer Bauchplatte in unterschiedlichen Stellungen, Fig. 4 eine weitere Darstellung des Frühgeborenensimulators, Fig. 5 eine Detailansicht des Frühgeborenensimulators mit einem Mechanismus zur interkostalen Einziehung, Fig. 6 und Fig. 7 eine Darstellung der Hautnachbildung in zwei verschiedenen Zuständen der interkostalen Einziehung, Fig. 8 eine Schnittansicht der Schädelnachbildung des Frühgeborenensimulators, Fig. 9 eine weitere Schnittansicht der Schädelnachbildung des Frühgeborenensimulators, Fig. 10 eine Vorderansicht der Schädelnachbildung des Frühgeborenensimulators, Fig. 11 eine Detaildarstellung der Schädelnachbildung im Bereich der Nase, Fig. 12 eine Stethoskopnachbildung im Zusammenwirken mit dem Frühgeborenensimulator, Fig. 13 ein Schaltbild der Stethoskopnachbildung, Fig. 14 eine Übersichtsdarstellung der Steuerlogik des Patientensimulators insbesondere betreffend das Lungenmodell, Fig. 15 eine Gesamtübersicht des Patientensimulators samt Steuer- und Überwachungskomponenten Fig. 16 eine Seitenansicht des Simulators mit der atemsynchronen Kopfbewegung und Fig. 17 eine Vorderansicht des Simulators gemäß Fig. 16.

Fig.1 zeigt einen Frühgeborenensimulator 1, der eine Thoraxnachbildung 2, einen Lungensimulator 3 und eine zum Lungensimulator 3 führende Luftröhrennachbildung 4 umfasst. Die Thoraxnachbildung 2 umfasst ein rechtes heb- und senkbares Brustkorbelement 5 für die rechte Brustkorbhälfte und ein linkes heb- und senkbares Brustkorbelement für die linke Brustkorbhälfte (in Fig.1 nicht dargestellt). Weiters umfasst der Simulator 1 eine Schädelnachbildung 6. Die beiden Brustkorbelemente 5 sind gesondert voneinander heb- und senkbar ausgebildet und jeweils mit einer eigenen ansteuerbaren Hub- und Senkmechanik ausgestattet. Die im Inneren des Simulators 1 angeordnete Hub- und Senkmechanik umfasst beiderseits jeweils eine elektromotorische Antriebseinheit 7, welche ein Zahnrad 8 antreibt. Das Zahnrad 8 greift in eine am schwenkbar gelagerten Arm 10 ausgebildete Zahnung 9 ein, wobei am Arm 10 das jeweilige rechte bzw. linke Brustkorbelement 5 befestigt ist, sodass die Drehbewegung des Zahnrads 8 je nach Drehrichtung in eine Hub- bzw. Senkbewegung des Arms 10 mit dem Brustkorbelement 5 in Richtung des Doppelpfeils 12 übersetzt wird. Das linke und das rechte Brustkorbelement 5 weisen jeweils eine Rippennachbildung 11 auf.

Weiters umfasst der Simulator 1 eine Abdomennachbildung 13, die eine heb- und senkbare Bauchplatte 14 aufweist, wobei die Hebung und Senkung der Bauchplatte 14 - analog zur Hebung und Senkung der Brustkorbelemente 5 - durch eine elektromotorische Antriebseinheit 15 erfolgt, welche ein Zahnrad 16 antreibt, das wiederum in eine Zahnung 17 eingreift, die an einem schwenkbar gelagerten Arm 18 ausgebildet ist, an welchem die Bauchplatte 14 befestigt ist.

Fig. 2 zeigt die Bauchplatte 14 und die Brustkorbelemente 5 in abgesenkter Position und Fig.3 zeigt die Bauchplatte 14 und die Brustkorbelemente 5 in angehobener Position.

Bei Betätigung der elektromotorischen Antriebseinheit 15 (in Fig.2 und Fig.3 nicht gezeigt) dreht sich das Zahnrad 16 und eine Hebung/Senkung der Bauchplatte 14 in Pfeilrichtung 19 wird durch Eingriff des Zahnrads 16 in die Verzahnung 17 und die dadurch induzierte Verschwenkung des antreibbaren Arms 18 bewirkt. Je nach Drehrichtung des Zahnrads 16 ist eine Simulation der Abdomenhebung bzw. -senkung möglich.

Fig.4 zeigt die komplette anatomische Stützkonstruktion des Simulators 1 über der eine Hautnachbildung 20 (in Fig. 4 nicht dargestellt) liegt, welche den gesamten Simulator 1, d.h auch die Thoraxnachbildung 2 mit den Rippennachbildungen 11, sowie die Abdomennachbildung 13 mit der Bauchplatte 14 überdeckt. Insbesondere umschließt die Hautnachbildung 20 die Thoraxnachbildung 2 sowie die Abdomennachbildung 13. Die Hautnachbildung 20 ist aus einem elastischen Material, wie z.B. aus einem Silikonmaterial, hergestellt, um die Hebung und Senkung der Brustkorbelemente 5 sowie der Bauchplatte 14 zuzulassen.

In den Fig.5 bis 7 ist weiters gezeigt, dass zur Simulation einer interkostalen Einziehung an der Hautnachbildung 20 angreifende Zugmittel 21 vorgesehen sind. Die Zugmittel 21 erstrecken sich zwischen den einzelnen Rippen der Rippennachbildung 11 hindurch und sind an ihrem der Hautnachbildung 20 abgewandten Ende jeweils an Schwenkstangen 21' befestigt. Die Schwenkstangen 21' sind an einer gemeinsamen Achse starr befestigt und daher um diese Achse schwenkbar, wobei zum Schwenkantrieb eine elektromotorische Antriebseinheit 22 vorgesehen ist, welche das Zahnrad 23 zur Drehbewegung antreibt, welches in das an der Achse der Schwenkstangen 21' befestige Zahnrad 24 eingreift. Die Verschwenkung der Schwenkstangen 21' im Sine des Doppelpfeils 25 bewirkt, dass die Hautnachbildung 20 zwischen die Rippennachbildungen 11 gezogen wird bzw. wieder in ihre Normalposition zurückbewegt wird. Je nach Drehrichtung des Antriebs 22 ist somit eine Simulation der interkostalen Einziehung oder der Normalposition der Hautnachbildung 20 möglich. Der Antrieb 22 ist hierbei am Arm 10 befestigt, der für das Anheben und das Absenken der Rippennachbildungen 11 verantwortlich ist. Dadurch, dass der Antrieb 22 bei einem Anheben oder Absenken des Arms mit diesem mitbewegt wird, kann die Simulation der interkostalen Einziehung der Hautnachbildung 20 unabhängig von der jeweiligen Stellung der Rippennachbildung 11 erfolgen.

In Fig.6 ist die Hautnachbildung 20 in der Normalposition und in Fig.7 bei simulierter, interkostaler Einziehung dargestellt.

Fig.8 und Fig.9 zeigen eine Kopfnachbildung 26 des Simulators 1, welche eine Schädelnachbildung 6 aufweist. Innerhalb der Schädelnachbildung 6 sind die Lichtquellen 27, 28, 29, 30 und 31 angeordnet.

Die Lichtquellen 27 und 28 sind an einer im Schädelhohlraum angeordneten Trägerplatte befestigt und im Bereich der Stirn gegen die Innenoberfläche der Schädeldecke der Schädelnachbildung 6 gerichtet. Die Lichtquellen 29 und 30 befinden sich in der mittleren Schädelgrube der Schädelnachbildung 6. Eine weitere Lichtquelle 31 ist im Inneren der Schädelnachbildung 6 angeordnet und speist einen Lichtwellenleiter 32, der sich bogenförmig im Kinnbereich 33 der Kopfnachbildung 26 erstreckt.

Dadurch, dass die Schädelnachbildung 6 und die Hautnachbildung 20 transluzent ausgebildet sind, ergibt sich bei Betätigung der Lichtquellen 27 bis 31 ein wie in Fig. 10 dargestelltes Beleuchtungsmuster der sich bei einer vorliegenden Zyanose charakteristisch blau und bei einer Hyperoxie charakteristisch rot färbenden Gesichtsbereiche.

Fig.11 zeigt die Kopfnachbildung 26 des Simulators 1 mit einer Nasennachbildung 34, die zwei flexible Nasenflügel 35 aufweist, wobei an den Nasenflügeln 35 in das Innere der Kopfnachbildung 26 führende Hebel 36 angreifen, die aus einem magnetisierbaren Material bestehen. Weiters ist eine Steuervorrichtung 37 vorgesehen, die Elektromagnete 38 trägt, wobei bei Ansteuerung der Steuervorrichtung 37 die Elektromagnete 38 aktiviert werden und die magnetischen Hebel 36 entsprechend der Pfeile 39 angezogen werden, was wiederum ein Aufweiten der Nasenflügel im Sinne der Pfeile 40 bedingt.

Fig. 12 zeigt eine Hautnachbildung 20, welche den gesamten Simulator 1, d.h. auch die Thoraxnachbildung 2 mit den Rippennachbildungen 11, sowie die Abdomennachbildung 13 mit der Bauchplatte 14 überdeckt. Insbesondere umschließt die Hautnachbildung 20 die Thoraxnachbildung 2 sowie die Abdomennachbildung 13. Die Hautnachbildung 20 ist aus einem elastischen Material, wie z.B. aus einem Silikonmaterial, hergestellt, um die Hebung und Senkung der Brustkorbelemente 5 sowie der Bauchplatte 14 zuzulassen.

Weiters ist in Fig.12 ein Stethoskopsimulator 41 gezeigt, wobei die Thoraxnachbildung 2 und die Abdomennachbildung 13 drei Abstandssensoren 43, 44, 45 aufweisen, die mit einem Stethoskopkopf 46 des Stethoskopsimulators 41 zur Ermittlung des Abstands zwischen dem Stethoskopkopf 46 und dem jeweiligen Abstandssensor 43, 44, 45 zusammenwirken, um abstandsproportionale Signale zu erhalten. Die Steuereinheit 48 umfasst einen Speicher für Audiodateien und eine Verarbeitungseinrichtung zum Abmischen der Audiodateien in Abhängigkeit von den Abstandsdaten zu einem abgemischten Audiosignal, das den Ohrhörern 47 des Stethoskopsimulators 41 zugeführt wird.

In Fig. 13 ist ein Schaltbild schematisch dargestellt, wobei ersichtlich ist, dass die Abstandssensoren 43, 44, 45 (in Fig. 13 nicht dargestellt) des Patientensimulators 1 als Nahfeldsender mit einem Senderschwingkreis 49 ausgeführt sind und der Stethoskopkopf 46 einen resonanten Empfängerschwingkreis 50 aufweist. Die Nahfeldsender des Patientensimulators 1 erzeugen dabei ein elektromagnetisches Nahfeld mit einer vorgegebenen Frequenz, wobei die Trägerfrequenz beispielsweise mit 100kHz definiert wird. Die Senderschwingkreise 49 sind auf diese Trägerfrequenz abgestimmt, wobei sich die Resonanzfrequenz und die Amplitude in Abhängigkeit von der Entfernung zum Empfängerschwingkreis 50 verändern. Die Resonanzfrequenz und die Amplitude der beiden Senderschwingkreise 49 werden in einer Auswerteeinrichtung 51 ausgewertet und als den jeweiligen Abstand zum Stethoskopkopf 46 repräsentierende Abstandsdaten drahtlos an eine zentrale externe Steuereinrichtung 48, wie z.B. einen Steuerrechner übermittelt. In der Steuereinrichtung 48 werden die Abstandsdaten von dem Empfangsmodul 52 empfangen. Die Abstandsdaten können unmittelbar dem Audiogenerator 42 zugeführt werden oder zuerst, z.B. durch Triangulationsverfahren, in Positionsdaten umgerechnet werden. Im Audiogenerator sorgt eine Verarbeitungseinrichtung dafür, dass gespeicherte Audiodateien 53 in Abhängigkeit von den Abstands- oder Positionsdaten zu einem gemeinsamen Audiosignal abgemischt werden. Das Audiosignal wird drahtlos an ein Empfängermodul 54 des Stethoskopsimulators 41 übermittelt und dort in einem Verstärker 55 verstärkt und den Ohrhörern 47 zugeführt. Der Stethoskopsimulator 41 umfasst weiters eine nicht dargestellte Energieversorgung, welche nicht nur das Empfängermodul 54 und den Verstärker 55, sondern über die Leitungen 56 auch den Empfängerschwingkreis 50 speist.

In Fig. 14 ist die Steuerung des Lungensimulators sowie die davon getrennte Ansteuerung des Hub- und Senkmechanismus der Brustkorbnachbildung näher dargestellt.

Der Lungensimulator 3 umfasst einen starrwandigen, vorzugsweise metallischen Zylinder 57, in dem ein Kolben 58 mit Hilfe eines Antriebs 59 (z.B. Schrittmotor) in axialer Richtung verstellbar angeordnet ist. An Stelle eines Schrittmotors kann der Antrieb des Kolbens 58 auch mittels eines Linearmotors erfolgen, der vorzugsweise auf Basis eines elektromagnetischen Feldes funktioniert, z.B. mittels eines magnetischen Linearantriebs. Der Kolben 58 begrenzt ein Arbeitsvolumen bzw. eine Kavität 60 des Lungensimulators 3, in welche eine Luftröhrennachbildung 4 mündet, in welche der Tubus 67 eines Beatmungsgerätes (nicht dargestellt) eingeführt werden kann. Am Übergang von der Luftröhrennachbildung 4 in die Kavität 60 ist eine Engstelle 61 vorgesehen, durch welche der Strömungsquerschnitt der Luft in der Luftröhrennachbildung 4 eine Verengung erfährt. Es sind weiter Drucksensoren 62 und 63 mit Überdruckventil (nicht dargestellt) zur Begrenzung des maximal zulässigen Drucks vorgesehen, die zur Messung des Drucks in der Kavität 60 sowie in der Luftröhrennachbildung 4 angeordnet sind.

Zur Nachbildung der einzelnen Lungenfunktionen ist eine computerunterstützte Steuereinrichtung 64, insbesondere eine Recheneinrichtung, vorgesehen, die mit einem physiologischen Rechenmodell 65 zusammenwirkt, mit welchem physiologische Zusammenhänge der simulierten Parameter des Lungensimulators simuliert werden können. Der Steuervorrichtung 64 sind die Signale der Drucksensoren 62 und 63 sowie die Signale eines Sensors 66 zur Erfassung der aktuellen Position des Kolbens 58 zugeführt. Die Steuervorrichtung 64 erzeugt Steuerbefehle für den Kolbenantrieb 59 zur geregelten Ansteuerung und Bewegung des Kolbens 58, wobei sich durch den Einsatz eines schnellen Regelsystems und auf Grund der starren Ausführung der kavitätsbegrenzenden Wände das Verhalten einer bei herkömmlichen Lungensimulatoren vorgesehenen flexiblen Membran nachstellen lässt.

Um einer angeschlossenen Beatmungsmaschine einen Patienten vorzutäuschen, ist es ausreichend, das Tidalvolumen des beatmeten Patienten zu simulieren, welches nur einen geringen Anteil der Gesamtkapazität der Lunge darstellt. Die Kavität 60 des Lungensimulators ist daher so bemessen, dass sie in der maximalen Kolbenstellung dem Tidalvolumen, zuzüglich einer Volumenreserve für die Regelung, eines menschlichen Patienten, insbesondere eines Frühgeborenen, Neugeborenen oder Kindes entspricht.

Um einem Beatmungsgerät eine Lunge zu simulieren, muss der Volumen- und Druckverlauf über die Zeit sich im Bereich physiologischer bzw. pathologischer Parameter bewegen. Damit ist sichergestellt, dass die Verwendung von Beatmungsgeräten (maschinelle und manuelle) in Kombination mit der integrierten Lungennachbildung zur Anzeige von realistischen Beatmungsparametern führt und eine Einstellung von realistischen Beatmungsdrücken und - volumina an Beatmungsgeräten erlaubt. Dies führt damit ebenfalls zur realistischen Auslösung von Druck- und Volumenalarmen am Beatmungsgerät.

Zur Simulation des Atemzugvolumens des Patientensimulators wird das Volumen der Kavität 60 bei der Einatmungssimulation durch entsprechendes Bewegen des Kolbens 58 vergrößert und bei der Ausatmungssimulation verringert.

Für die Simulation der Compliance wird sowohl der aktuelle Druck in der Kavität 60 als auch das aktuelle Volumen der Kavität 60 ermittelt. Die Compliance ist hierbei definiert als die Volumenerhöhung ΔV je Erhöhung des applizierten Gasdruckes Δp, wobei die Abhängigkeit der Volumenerhöhung ΔV von der Druckerhöhung Δp nicht-linear ist, d.h. das Verhältnis ΔV/Δp wird gegen Ende der Einatmung kleiner (selbst eine kleine Volumenzunahme erzeugt einen großen Druckanstieg). Der Druck p wird mit Hilfe des Drucksensors 62 gemessen. Das Volumen V ergibt sich aus dem bekannten Querschnitt des Zylinders 57 und der mit dem Sensor 66 gemessenen Kolbenposition. Verändert sich der Druck anders als es die Kolbenposition (direkt proportional zum Volumen) vorgibt, kann mit Hilfe des elektromechanischen Antriebs 59 die Kolbenposition nachgeführt werden. Die zeitliche Auflösung der Regelung muss hierfür so hoch wie möglich gewählt werden, damit keine Quantisierungsstufen erkennbar sind. Im gewählten Aufbau kann zusätzlich durch einen zweiten Drucksensor im Arbeitsvolumen in Verbindung mit einer Engstelle am Kolbenauslass ein Volumenstromsensor realisiert werden, der zur Verfeinerung der Abbildung genutzt werden kann.

Aus Sicht des Beatmungsgerätes ist nur der Druck am Ende des Tubus relevant. Dieser Umstand kann genutzt werden, um die Resistance durch die dynamische Komponente des Regelkreises zu simulieren. Diese fügt zusätzlich eine zeitliche Komponente in das System ein. Bei erhöhtem Strömungswiderstand in den Atemwegen verzögert sich die Füllung der Lunge bzw. wird derart erschwert, dass kein Gasaustausch in der vorgesehenen Zeit möglich ist.

$$R = \frac{\Delta p}{\dot V} \qquad \dot V = \frac{\Delta V}{t}$$

Bei einer erhöhten Resistance kommt es zu einem Rückstau der Atemgase im Tubus, der Druck steigt, der Volumenstrom sinkt. Niedrige Resistance R in der Lunge erzeugt einen geringen Gegendruck p im Tubus, der Volumenstrom V wird maximal.

Um diesen Effekt mit nur einem einzelnen Kolben 58 zu simulieren, ist es notwendig, den Druck in der Kavität 60 dem Druck im Tubus 67 anzupassen. Bei niedriger Resistance wird der Druck in der Kavität 60 niedriger bzw. gleich dem Druck im Tubus 67 gehalten, um das Einströmen der Gase zu erleichtern. Bei erhöhter Resistance wird in der Kavität 60 ein erhöhter Gegendruck erzeugt, welcher das Einströmen der Atemgase behindert. Die Reduzierung bzw. Erhöhung des Gegendrucks wird dabei durch die Verstellung des Kolbens 58 bewerkstelligt. Bei der Ansteuerung der Kolbenstellung werden insgesamt somit zwei Einflussgrößen berücksichtigt. Einerseits die sich aus der Compliance ergebende Kolbenposition in Abhängigkeit vom Druck in der Kavität 60, andererseits die sich aus der Resistance ergebende Einstellung eines Gegendrucks.

Durch die Erfassung der Drücke in der Kavität 60, als auch im Tubus 67 und anhand des bekannten Durchmessers der Engstelle kann zusätzlich auf den aktuellen Volumenstrom rückgeschlossen werden.

Die optionale, auf den Kolben wirkende Feder 75 stellt eine sog. Grundcompliance zur Verfügung, d.h. die Feder 75 bedingt ein passives Halten des Drucks in der Kavität 60 des Lungensimulators.

Eine andere Sichtweise stellt die Auswertung des Volumenstromes dar, da durch die beiden Drucksensoren mit der Engstelle ein Volumenstromsensor gebildet wird, der den Volumenstrom direkt misst.

In der Steuereinrichtung 64 liegen auf Grund der Messwerte der Drucksensoren 62 und 63 sowie auf Grund der durch den Sensor 66 ermittelten Kolbenstellung das Volumen der Kavität 60, der Volumenstrom in bzw. aus der Kavität 60 sowie der Druck in der Kavität 60 vor. Mit dem physiologischen Rechenmodell 65 können daraus Informationen betreffend die Compliance und die Resistance errechnet werden bzw. umgekehrt können aus einem vorgegebenen Compliancewert und einem vorgegebenen Resistancewert entsprechende Werte für den Druck, den Volumenstrom und das Volumen errechnet werden.

Das physiologische Rechenmodel ist ausgebildet, um aus den Werten für Compliance, Resistance und Atempathologien (z.B. Schaukelatmung) das aktuelle Füllvolumen zu definieren und weiters gesondert die Positionsdaten für die momentane Position der Brustkorbnachbildung und der Bauchplatte zu generieren, die der Animationssteuerung 68 geführt werden. In der Animationssteuerung 68 werden daraus Steuersignale für die mit der Brustkorbnachbildung zusammenwirkende Hub- und Senkmechanik 69 und für die mit der Bauchplatte zusammenwirkende Hub- und Senkmechanik 70 generiert, sodass die Simulation der Atembewegungen synchron mit und entsprechend dem Simulationszustand des Lungensimulator 3 erfolgt.

In Fig. 15 ist eine Gesamtübersicht eines Simulationssystems umfassend den Patientensimulator 1 und die Steuer- und Überwachungskomponenten dargestellt. Der Patientensimulator 1 stellt eine Nachbildung des gesamten Körpers eines Früh-, Neugeborenen oder Kindes dar. Das System umfasst weiters einen Server 71, ein graphisches Benutzerinterface 72, einen Patientenmonitor 73 und einen Simulationsrechner 74.

Der Simulationsrechner 74 ist für die Kommunikation des Patientensimulators 1 mit dem graphischen Benutzerinterface 72 und dem Patientenmonitor 73 verantwortlich und ist vorzugsweise in den Patientensimulator 1 integriert. Der Simulationsrechner 74 übernimmt dabei die rechenintensive Aufbereitung der Steuerbefehle und Sensordatenerfassung. Dabei kommuniziert der Simulationsrechner 74 mit den im Simulator 1 verbauten Komponenten und sammelt diverse Sensordaten des Simulators 1, verarbeitet diese und generiert in weiterer Folge Steuersignale, mit denen z.B. die Servomotoren des Simulators 1 kontrolliert werden.

Der Simulationsrechner 74 umfasst in Bezug auf den Lungensimulator (Fig. 14) das physiologischen Rechenmodell 65 und die Animationssteuerung 68.

Die Steuerung des gesamten Simulationssystems durch einen Trainer erfolgt über das graphische Benutzerinterface 72. Diese Benutzeroberfläche ermöglicht dem Trainer die Eingabe der Rahmenbedingungen für das Trainingsszenario. Im Verlauf der Übung werden hier die gewünschten pathologischen Veränderungen gesteuert und die vom Übungsteilnehmer durchgeführten Maßnahmen können durch eine Visualisierung der Sensordaten des Systems dem Trainer auf der Benutzeroberfläche sichtbar gemacht werden. Dazu werden die Parameter und die einzelnen Funktionen des Simulators 1, wie Atmung und Herzschlag, zunächst an den Simulationsrechner 74 übergeben und dort die entsprechenden Steuerbefehle für den Patientensimulator 1 generiert.

Die Benutzeroberfläche ist vorzugsweise in drei Bereiche aufgeteilt: 1.) die Darstellung des Neu- bzw. Frühgeborenen, mit den Steuerelementen für z.B. EKG, Sättigungsmonitoring und periphere Zugänge, 2.) der Bereich für die Steuerung der Atemfunktionen und 3.) der Bereich zur Abbildung und Steuerung des Patientenmonitors 73. Im Zentrum der Benutzeroberfläche stehen das 3D-Modell der Lunge und das 3D-Modell des Simulators jeweils im aktuellen Simulationszustand. Die Steuerelemente ermöglichen die "Fernsteuerung" des Simulationssystems über die Zwischenschicht des Simulationsrechners 74. Der Simulationsrechner 74 bestimmt kontinuierlich den aktuellen Zustand, in dem sich der Simulator 1 gerade befindet und überträgt diesen an das graphische Benutzerinterface 72, das diesen Zustand exakt auf der Oberfläche wiedergibt. Dies ermöglicht z.B. eine Live-Darstellung von Maßnahmen, die von den Trainingsteilnehmern vorgenommen werden, z.B. Herzdruckmassagen.

Für die Darstellung der simulierten Vitalwerte des simulierten Patienten umfasst das System einen Patientenmonitor 73. An den Patientenmonitor 73 werden die einstellbaren und die gemessenen Vitalparameter, die in Echtzeit am graphischen Benutzerinterface 72 dargestellt werden, von dieser vorzugsweise kabellos, wie z.B. über WLAN übertragen. Damit werden die physiologischen Daten des simulierten Patienten für die Trainingsteilnehmer visualisiert. Die realistische Darstellung dieser Werte ist für die Entscheidungsfindung und das Einleiten der entsprechenden Maßnahmen für die Trainierenden von entscheidender Bedeutung. Für die Bedienung des Monitors, wie z.B. das Quittieren von Alarmen, verfügt dieser über einen Touchscreen.

Der optionale Server 71 dient der Verwaltung und Kommunikation von Daten, die den Patientenmonitor 73 betreffen und nicht im Modell des Simulators 1 abgebildet sind.

Fig. 16 und Fig. 17 zeigen eine Seitenansicht und eine Vorderansicht des Simulators mit Mitteln zur Simulation der atemsynchronen Kopfbewegung. Fig. 16 entspricht im Wesentlichen der Ausbildung gemäß Fig. 3, wobei zusätzlich zwei Bowdenzüge 76 vorgesehen sind, die zu beiden Seiten der Atemwegsnachbildung (Luftröhrennachbildung 4) verlaufen. Die Bowdenzüge 76 sind einerseits stabil an zwei Hebeln 77 der Schädelnachbildung 6, insbesondere am hinteren Gaumendach, angebracht und sind andererseits mit dem caudalen Ende der beiden Rippenschwingen 79, den Hebelarmen der Thoraxhälften, jeweils über einen steuerbaren Klemmmechanismus 78, verbunden. Wenn der Klemmmechanismus 78 aktiviert ist, wird eine zugfeste Verbindung zwischen dem Seil des jeweiligen Bowdenzuges 76 und der Rippenschwinge 79 hergestellt, sodass das Anheben der Rippenschwinge 79 einen entsprechenden Zug auf das Seils bewirkt. Der Klemmmechanismus 78 ermöglicht die Fixierung des jeweiligen Bowdenzuges 76 bei maximaler Exspiration (Rippenschwinge 79 gesenkt). Durch das Anheben der Rippenschwinge 79 bei der Inspiration wird ein Zug auf das Seil des Bowdenzugs ausgeübt, der damit ein nach vorne Neigen des Kopfes 6 synchron zur Brusthebung induziert. Die Gegenbewegung erfolgt durch die Rückstellkraft der gespannten Silikonkomponenten (z.B. Silikonhaut im Nackenbereich und Silikonkomponenten des Atemweges) des Simulators. Diese Elemente wirken wie Gegenfedern.

Auf Grund der getrennten Ansteuermöglichkeit der beiden Klemmmechanismen 78 ist sowohl ein Vorbeugen bei Aktivierung beider Klemmen 78, als auch ein seitliches Beugen bei Aktivieren von nur einer Klemme 78 möglich.

Ein weiterer Aspekt ist der Zeitpunkt der Klemmung während des Anhebens der Rippenschwinge 79, da damit die Stäke der Kopfbewegung beeinflusst werden kann. Wenn der Klemmmechanismus 78 nicht in der Stellung der maximalen Exspiration aktiviert wird, sondern erst nachdem die Rippenschwinge 79 einen ersten Teilweg zurückgelegt hat, wird die Kopfneigung in einem geringeren Ausmaß vorgenommen. Durch diese Variationsmöglichkeiten ist es möglich die Kopfbewegung nach einem Zufallsprinzip variabel zu gestalten, sodass die Bewegung einer natürlicheren Bewegung entspricht.

## Patentansprüche

1. Patientensimulator, insbesondere Frühgeborenen-, Neugeborenen- oder Kindersimulator, umfassend eine Thoraxnachbildung, eine Abdomennachbildung, einen Stethoskopsimulator und einen Audiogenerator, wobei die Thoraxnachbildung und die Abdomennachbildung wenigstens zwei Abstandssensoren aufweisen, die mit einem Stethoskopkopf des Stethoskopsimulators zur Ermittlung der Position des Stethoskopkopfs zusammenwirken, wobei die ermittelten Positionsdaten dem Audiogenerator zuführbar sind, wobei der Audiogenerator einen Speicher für Audiodateien und eine Verarbeitungseinrichtung zum Abmischen der Audiodateien in Abhängigkeit von den Positionsdaten zu einem abgemischten Audiosignal aufweist, das einem Ohrhörer des Stethoskopsimulators zuführbar ist.

2. Patientensimulator nach Anspruch 1, **dadurch gekennzeichnet, dass** für jede Position auf der Thorax- bzw. Abdomennachbildung wenigstens ein Audiosignal abmischbar ist, das Geräusche des menschlichen Körpers an der entsprechenden Position repräsentiert, wobei die Geräusche in Abhängigkeit von der Stethoskopkopfposition gewichtet aus mindestens einer gespeicherten Audiodatei abgemischt und im Stethoskop ausgegeben werden.

3. Patientensimulator nach Anspruch 1 oder 2, **dadurch gekennzeichnet, dass** die Verarbeitungseinrichtung zum Abmischen der Audiodateien mit Vorteil so ausgebildet ist, dass eine Audiodatei dem abgemischten Signal mit einer umso größeren Lautstärke hinzugeführt wird, je geringer der Abstand des Stethoskopkopfs von der dieser Audiodatei zugeordneten Position ist.

4. Patientensimulator nach einem der Ansprüche 1, 2 oder 3, **dadurch gekennzeichnet, dass** jede Audiodatei mit physiologischem Geräusch durch eine Audiodatei mit pathologischem Geräusch ersetzt werden kann und diese für die Ausgabe des positionsgebundenen Audiosignals entsprechend der Stethoskopkopfposition abgemischt wird.

5. Patientensimulator nach einem der Ansprüche 1 bis 4, **dadurch gekennzeichnet, dass** zumindest eine Audiodatei ein Herzgeräusch simuliert und der Position des Herzens der Thoraxnachbildung zugeordnet ist, dass eine Audiodatei ein erstes Lungengeräusch simuliert und der Position des linken Lungenflügels der Thoraxnachbildung zugeordnet ist, dass eine Audiodatei ein zweites Lungengeräusch simuliert und der Position des rechten Lungenflügels der Thoraxnachbildung zugeordnet ist und/oder dass eine Audiodatei ein Magengeräusch simuliert und der Position des Magens der Abdomennachbildung zugeordnet ist.

6. Patientensimulator nach einem der Ansprüche 1 bis 5, **dadurch gekennzeichnet, dass** der Simulator oder das Stethoskop einen Nahfeldsender und das Stethoskop oder der Simulator jeweils eine Empfängerspule aufweist.

Fig. 1

Fig. 2

Fig. 3

Fig. 4

Fig. 5

Fig. 6

Fig. 7

Fig. 8

Fig. 9

26

20

Fig. 10

Fig. 11

Fig. 12

EP 3 852 088 A1

Fig. 13

EP 3 852 088 A1

Fig. 14

Fig. 15

Fig. 16

Fig. 17

**EUROPÄISCHER RECHERCHENBERICHT**

Europäisches Patentamt
European Patent Office
Office européen des brevets

Nummer der Anmeldung

EP 21 02 0093

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2016/030393 A1 (HOPITAUX UNIVERSITAIRES GENEVE [CH]) 3. März 2016 (2016-03-03)<br>* Abbildungen 1-8 *<br>* Seite 6, Absatz 2 - Seite 9, Absatz 4 *<br>* Seite 9, Absatz 4 *<br>* Seite 10, Absatz 4 - Seite 11, Absatz 1 * | 1-6 | INV.<br>G09B23/28<br>A63H3/36<br>A63H13/00 |
| A | US 4 850 876 A (LUTAENKO VYACHESLAV F [SU] ET AL) 25. Juli 1989 (1989-07-25)<br>* Spalte 11, Zeile 45 - Zeile 60 * | 1-6 | |
| A | US 5 584 701 A (LAMPOTANG SAMSUN [US] ET AL) 17. Dezember 1996 (1996-12-17)<br>* Spalte 6, Zeile 34 - Zeile 59 *<br>* Spalte 16, Zeile 10 - Spalte 17, Zeile 13 *<br>* Spalte 19, Zeile 29 - Zeile 37 *<br>* Spalte 30, Zeile 40 - Spalte 31, Zeile 16 * | 1-6 | |
| A | US 3 520 071 A (ABRAHAMSON STEPHEN ET AL) 14. Juli 1970 (1970-07-14)<br>* Spalte 8, Zeile 53 - Zeile 72 *<br>* Spalte 4, Zeile 20 - Zeile 49 * | 1-6 | RECHERCHIERTE SACHGEBIETE (IPC)<br><br>G09B<br>A63H |
| X | US 2008/138779 A1 (EGGERT JOHN S [US] ET AL) 12. Juni 2008 (2008-06-12)<br>* Absatz [0078] - Absatz [0080] *<br>* Absatz [0083] - Absatz [0086] * | 1-6 | |
| A | FR 2 965 089 A1 (FOUCQUETEAU PHILIPPE [FR]; MICHAUD CYRILLE [FR]) 23. März 2012 (2012-03-23)<br>* Seite 3, Zeile 25 - Seite 5, Zeile 23 *<br>* Seite 7, Zeile 6 - Seite 8, Zeile 8 * | 1-6 | |

-/--

Der vorliegende Recherchenbericht wurde für alle Patentansprüche erstellt

| Recherchenort | Abschlußdatum der Recherche | Prüfer |
|---|---|---|
| München | 21. April 2021 | Hanon, David |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Seite 1 von 2

**EP 3 852 088 A1**

Europäisches Patentamt
European Patent Office
Office européen des brevets

# EUROPÄISCHER RECHERCHENBERICHT

Nummer der Anmeldung

EP 21 02 0093

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | FR 519 188 A (ERNEST DE BEZENAC [FR]) 6. Juni 1921 (1921-06-06) * Seite 2, Zeile 82 - Zeile 87; Abbildung 8 * ----- | 1 | |
| X | EP 1 687 790 A2 (GAUMARD SCIENT COMPANY INC [US]) 9. August 2006 (2006-08-09) * Absatz [0030] * * Absatz [0033] * * Absatz [0035] * * Absatz [0038] * ----- | 1-6 | |
| X | US 2010/279262 A1 (LECAT PAUL JACQUES CHARLES [US]) 4. November 2010 (2010-11-04) * Absatz [0024] - Absatz [0025] * * Absatz [0030] - Absatz [0032] * * Absatz [0036] * * Absatz [0039] * * Absatz [0045] * ----- | 1-6 | |
| A | US 2014/302473 A1 (NAKAGUCHI TOSHIYA [JP] ET AL) 9. Oktober 2014 (2014-10-09) * Absatz [0019] - Absatz [0020] * * Absatz [0042] - Absatz [0044] * ----- | 1-6 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 21. April 2021 | Hanon, David |

EPO FORM 1503 03.82 (P04C03)

Seite 2 von 2

Europäisches
Patentamt

European
Patent Office

Office européen
des brevets

**Nummer der Anmeldung**

EP 21 02 0093

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☒ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

**ANHANG ZUM EUROPÄISCHEN RECHERCHENBERICHT**
**ÜBER DIE EUROPÄISCHE PATENTANMELDUNG NR.**                    EP 21 02 0093

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-04-2021

| Im Recherchenbericht angeführtes Patentdokument | Datum der Veröffentlichung | Mitglied(er) der Patentfamilie | Datum der Veröffentlichung |
|---|---|---|---|
| WO 2016030393 A1 | 03-03-2016 | KEINE | |
| US 4850876 A | 25-07-1989 | CH 671300 A5 | 15-08-1989 |
| | | FR 2588984 A1 | 24-04-1987 |
| | | GB 2193029 A | 27-01-1988 |
| | | HU 203420 B | 29-07-1991 |
| | | JP S63502053 A | 11-08-1988 |
| | | NO 166824 B | 27-05-1991 |
| | | US 4850876 A | 25-07-1989 |
| | | WO 8703407 A1 | 04-06-1987 |
| US 5584701 A | 17-12-1996 | US 5584701 A | 17-12-1996 |
| | | US 5769641 A | 23-06-1998 |
| | | US 5772443 A | 30-06-1998 |
| | | US 5779484 A | 14-07-1998 |
| | | US 5868579 A | 09-02-1999 |
| | | US 5882207 A | 16-03-1999 |
| | | US 5890908 A | 06-04-1999 |
| | | US 5941710 A | 24-08-1999 |
| US 3520071 A | 14-07-1970 | KEINE | |
| US 2008138779 A1 | 12-06-2008 | EP 2229670 A2 | 22-09-2010 |
| | | JP 2011507017 A | 03-03-2011 |
| | | US 2008138779 A1 | 12-06-2008 |
| | | WO 2009076145 A2 | 18-06-2009 |
| FR 2965089 A1 | 23-03-2012 | FR 2965089 A1 | 23-03-2012 |
| | | WO 2012038635 A1 | 29-03-2012 |
| FR 519188 A | 06-06-1921 | KEINE | |
| EP 1687790 A2 | 09-08-2006 | EP 1687790 A2 | 09-08-2006 |
| | | JP 4585521 B2 | 24-11-2010 |
| | | JP 2007514967 A | 07-06-2007 |
| | | WO 2005053508 A2 | 16-06-2005 |
| US 2010279262 A1 | 04-11-2010 | BR 112012028573 A2 | 24-09-2019 |
| | | CA 2798820 A1 | 10-11-2011 |
| | | DE 11778431 T1 | 22-08-2013 |
| | | EP 2567372 A2 | 13-03-2013 |
| | | ES 2412904 T1 | 12-07-2013 |
| | | US 2010279262 A1 | 04-11-2010 |
| | | WO 2011140467 A2 | 10-11-2011 |
| US 2014302473 A1 | 09-10-2014 | JP 5754708 B2 | 29-07-2015 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT**
**ÜBER DIE EUROPÄISCHE PATENTANMELDUNG NR.**                    EP 21 02 0093

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-04-2021

| Im Recherchenbericht angeführtes Patentdokument | Datum der Veröffentlichung | Mitglied(er) der Patentfamilie | | Datum der Veröffentlichung |
|---|---|---|---|---|
| | | JP | 2012247513 A | 13-12-2012 |
| | | US | 2014302473 A1 | 09-10-2014 |
| | | WO | 2012160999 A1 | 29-11-2012 |

Für nähere Einzelheiten zu diesem Anhang : siehe Amtsblatt des Europäischen Patentamts, Nr.12/82

EPO FORM P0461

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012155283 A1